(19) **Europäisches Patentamt / European Patent Office / Office européen des brevets**

(11) **EP 4 515 797 B1**

(12) **EUROPEAN PATENT SPECIFICATION**

(45) Date of publication and mention of the grant of the patent:
**01.04.2026   Bulletin 2026/14**

(21) Application number: **23725436.2**

(22) Date of filing: **28.04.2023**

(51) International Patent Classification (IPC):
**H04L 5/00** (2006.01)     **H04W 72/23** (2023.01)

(52) Cooperative Patent Classification (CPC):
**H04L 5/0051; H04L 5/0023; H04L 5/0048; H04L 5/0094**

(86) International application number:
**PCT/IB2023/054476**

(87) International publication number:
**WO 2023/209680 (02.11.2023 Gazette 2023/44)**

(54) **DYNAMIC SWITCHING BETWEEN LEGACY AND EXTENDED DMRS PROCEDURES**

DYNAMISCHE UMSCHALTUNG ZWISCHEN BESTEHENDEN UND ERWEITERTEN DMRS-PROZEDUREN

COMMUTATION DYNAMIQUE ENTRE DES PROCÉDURES DMRS EXISTANTES ET ÉTENDUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **29.04.2022   US 202263336813 P**

(43) Date of publication of application:
**05.03.2025   Bulletin 2025/10**

(73) Proprietor: **Telefonaktiebolaget LM Ericsson (publ)**
**164 83 Stockholm (SE)**

(72) Inventors:
• **ZHANG, Jianwei**
  **170 62 Solna (SE)**

• **NILSSON, Andreas**
  **413 13 Göteborg (SE)**
• **MURUGANATHAN, Siva**
  **Stittsville, Ontario K2S0R3 (CA)**
• **JACOBSSON, Sven**
  **421 33 Västra Frölunda (SE)**

(74) Representative: **Ericsson**
**Patent Development**
**Torshamnsgatan 21-23**
**164 80 Stockholm (SE)**

(56) References cited:
**WO-A1-2022/033555     WO-A1-2022/033555**
**US-A1- 2023 198 808     US-A1- 2023 198 808**

**Description**

This PCT application claims priority to U.S. Provisional Application Serial No. 63/336,813, filed 29 April 2022, titled "Dynamic Switching Between Legacy and Advanced DMRS Protocols".

**TECHNICAL FIELD**

The present disclosure relates generally to wireless communication networks, and in particular to use of an extended antenna port table including both legacy DeModulation Reference Signal (DMRS) ports and extended (*e.g.*, Rel-18) DMRS ports.

**BACKGROUND**

Wireless communication networks are ubiquitous in many parts of the world. In one architecture, known as cellular networks, a plurality of generally fixed base stations (also known as radio base station, base station controller, Node-B, eNB, gNB, etc.) each provides wireless communication services to a large plurality of generally mobile wireless devices (also known as cellphones, smartphones, and more generally, User Equipment or UE). The base stations, with wireless links to UEs, form a Radio Access Network (RAN). The base stations in turn communicate (via wired or wireless links) to a Core Network (CN), which provides connectivity to further networks, such as the Internet and conventional telephone networks.

Technical specifications developed and promulgated by standards bodies, such as the Third Generation Partnership Project (3GPP), govern operation of the networks, and ensure interoperability between equipment from different manufacturers. These standards continuously evolve to incorporate newly developed radio, computer, and networking technology, hence increasing the volume and quality of data transfer, and supporting new use cases. The fourth generation (4G) wireless protocol, known as Long Term Evolution (LTE) has been deployed, and the fifth generation (5G), known as New Radio (NR), is in advanced development and early deployment. On a finer granularity, 3GPP technical standards advance by numbered Releases (*e.g.*, Rel-14, Rel-15, etc.).

As the name implies, wireless communication networks employ wireless data transmissions across the air interface of the RAN, between UEs and base stations (and also possibly between UEs). To improve accuracy, this channel is monitored, and modulation and coding schemes (MCS), transmission power, and the like are determined and dynamically adjusted (known as link adaptation) in response to the instantaneous channel quality. To monitor the channel, the UE and base station each transmit various Reference Signals (RS, also known as pilot signals), which are known patterns of data. The receiver of the RS compares data received in an RS with what it "knows" was transmitted, and quantifies the quality of the channel based on this comparison. The specifications of various RS have evolved with different generations of 3GPP standards. In NR, different RS are defined for each physical channel. In particular, DeModulation Reference Signals (DMRS) are defined for the Physical Downlink Shared Channel (PDSCH) and Physical Uplink Shared Channel (PUSCH).

Downlink (DL) PDSCH transmissions can be either dynamically scheduled, *i.e.*, in each slot the gNB transmits Downlink Control Information (DCI) over PDCCH about which UE data is to be transmitted to and which RBs in the current downlink slot the data is transmitted on, or Semi-Persistently Scheduled (SPS) in which periodic PDSCH transmissions are activated or deactivated by a DCI. Different DCI formats are defined in NR for DL PDSCH scheduling including DCI format 1_0, DCI format 1_1, and DCI format 1_2.

Similarly, UL PUSCH transmission can also be scheduled either dynamically or semi-persistently with uplink grants carried in PDCCH. NR supports two types of semi-persistent uplink transmission, *i.e.*, type 1 configured grant (CG) and type 2 configured grant, where type 1 configured grant is configured and activated by Radio Resource Control (RRC) while type 2 configured grant is configured by RRC but activated/deactivated by DCI. The DCI formats for scheduling PUSCH include DCI format 0_0, DCI format 0_1, and DCI format 0_2.

**DMRS configuration**

DeModulation reference signals (DMRS) are used for coherent demodulation of physical layer data channels, *i.e.*, Physical Downlink Shared Channel (PDSCH) and Physical Uplink Shared Channel (PUSCH), as well as of Physical Downlink Control Channel (PDCCH). The DMRS is confined to resource blocks carrying the associated physical layer channel and is mapped on allocated resource elements of the time-frequency resource grid such that the receiver can efficiently handle time/frequency-selective fading radio channels.

The mapping of DMRS to resource elements is configurable in both frequency and time domain. There are two mapping types in the frequency domain, *i.e.*, type 1 and type 2. In addition, there are two mapping types in the time domain, *i.e.*, mapping type A and type B, which defines the symbol position of the first OFDM symbol containing DMRS within a transmission interval.

The DMRS mapping in time domain can further be single-symbol based or double-symbol based, where the latter means that DMRS is mapped in pairs of two adjacent OFDM symbols. For single symbol based DMRS, a UE can be configured with one, two, three, or four single-symbol DMRS (also referred to as additional DMRS) in a slot. For double-symbol based DMRS, a UE can be configured with one or two such double-symbol DMRS in a slot. In scenarios with low Doppler frequency shift, it may be sufficient to configure front-loaded DMRS only, *i.e.*, one single-symbol DMRS or one double-symbol DMRS, whereas in scenarios with high Doppler additional DMRS will be required in a slot.

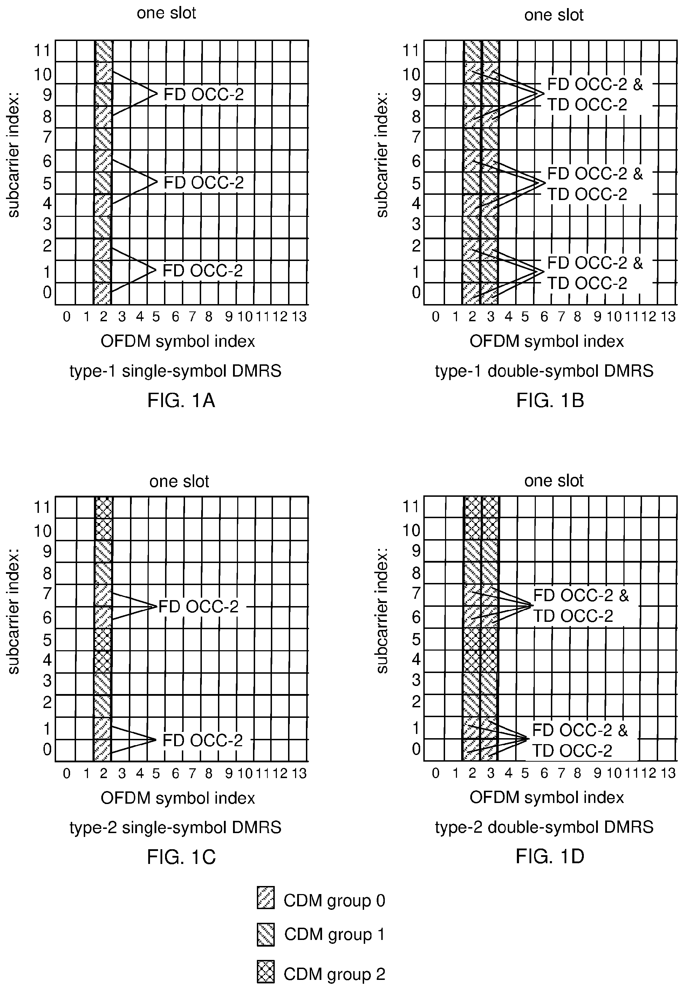

Figures 1A-D show front-loaded DMRS for configuration type 1 and type 2 where different Code Division Multiplexing (CDM) groups are indicated by different hashing. Figures 1A-D show examples of type 1 and type 2 front-loaded DMRS, with single-symbol and double-symbol DMRS, and time domain mapping type A with the first DMRS in the third OFDM symbol of a transmission interval of 14 symbols. As these figures indicate, type 1 and type 2 differ with respect to both the mapping structure and the number of supported DMRS CDM groups, where type 1 supports 2 CDM groups and Type 2 supports 3 CDM groups.

A DMRS antenna port is mapped to the resource elements within one CDM group only. For single-symbol DMRS, two antenna ports can be mapped to each CDM group whereas for double-symbol DMRS four antenna ports can be mapped to each CDM group. Hence, for DMRS type 1 the maximum number of DMRS ports is four for a single-symbol based DMRS configuration and eight for double-symbol based DMRS configuration. For DMRS type 2, the maximum number of DMRS ports is six for a single-symbol based DMRS configuration and twelve for double-symbol based DMRS configuration.

An orthogonal cover code (OCC) of length 2 (*i. e.,* [+1, +1] or [+1, -1]) is used to separate antenna ports mapped in the same two resource elements within a CDM group. The OCC is applied in frequency domain (FD) as well as in time domain (TD) when double-symbol DMRS is configured. This is illustrated in Figures 1A-D for CDM group 0.

In NR Rel-15, the mapping of a PDSCH DMRS sequence $r(m), m = 0, 1, ...$ on antenna port $p$ and subcarrier $k$ in OFDM symbol $l$ for the numerology index $\mu$ is specified in 3GPP TS38.211.

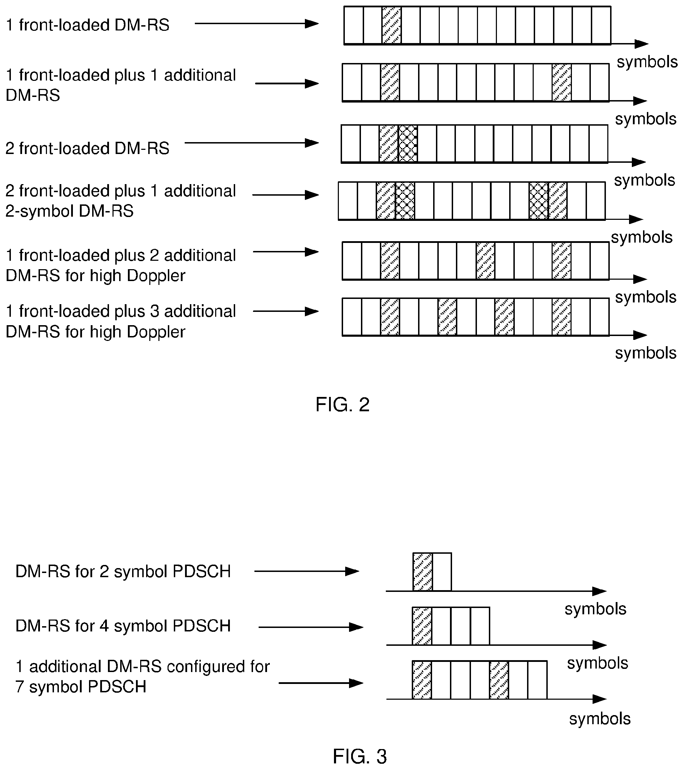

For PDSCH mapping type A, DMRS mapping is relative to slot boundary. That is, the first front-loaded DMRS symbol in DMRS mapping type A is in either the 3rd or 4th symbol of the slot. In addition to the front-loaded DMRS, type A DMRS mapping can consist of up to 3 additional DMRS. Some examples of DMRS for PDSCH mapping type A are shown in Figure 2 (note that PDSCH length of 14 symbols is assumed in the examples). This figure assumes that the PDSCH duration is the full slot. If the scheduled PDSCH duration is shorter than the full slot, the positions of the DMRS changes according to the specification TS 38.211.

For PDSCH mapping type B, DMRS mapping is relative to transmission start. That is, the first DMRS symbol in DMRS mapping type B is in the first symbol in which type B PDSCH starts. Some examples of DMRS for PDSCH mapping type B are shown in Figure 3.

## DMRS Sequence generation

The DMRS sequence $r(n)$ for both PDSCH and PUSCH is defined by

$$r(n) = \frac{1}{\sqrt{2}}\left(1 - 2 \cdot c(2n)\right) + j\frac{1}{\sqrt{2}}\left(1 - 2 \cdot c(2n+1)\right).$$

where the pseudo-random sequence $c(i)$ is defined in clause 5.2.1 of 3GPP TS 38.211. The pseudo-random sequence generator is initialized with

$$c_{\text{init}} = \left(2^{17}\left(N_{\text{symb}}^{\text{slot}} n_{\text{s,f}}^{\mu} + l + 1\right)\left(2N_{\text{ID}}^{\bar{n}_{\text{SCID}}^{\bar{\lambda}}} + 1\right) + 2^{17}\left\lfloor \frac{\bar{\lambda}}{2} \right\rfloor + 2N_{\text{ID}}^{\bar{n}_{\text{SCID}}^{\bar{\lambda}}} + \bar{n}_{\text{SCID}}^{\bar{\lambda}}\right) \bmod 2^{31}$$

where $l$ is the OFDM symbol number within the slot, $n_{\text{s,f}}^{\mu}$ is the slot number within a frame, and

- For PDSCH DMRS, $N_{\text{ID}}^0, N_{\text{ID}}^1 \in \{0, 1, ..., 65535\}$ are given by the higher-layer parameters *scramblingID0* and *scramblingID1,* respectively, in the *DMRS-DownlinkConfig* IE if provided and the PDSCH is scheduled by PDCCH using DCI format 1_1 or 1_2 with the CRC scrambled by C-RNTI, MCS-C-RNTI, or CS-RNTI;

- For PUSCH DMRS, $N_{\text{ID}}^0, N_{\text{ID}}^1 \in \{0, 1, ..., 65535\}$ are given by the higher-layer parameters *scramblingID0* and *scramblingID1,* respectively, in the *DMRS-UplinkConfig* IE if provided and the PUSCH is scheduled by DCI format 0_1 or 0_2, or by a PUSCH transmission with a configured grant;

- For PUSCH DMRS, $N_{ID}^0, N_{ID}^1 \in \{0,1,...,65535\}$ are, for each msgA PUSCH configuration, given by the higher-layer parameters *msgA-ScramblingID0* and *msgA-ScramblingID1*, respectively, in the *msgA-DMRS-Config* IE if provided and the PUSCH transmission is triggered by a Type-2 random access;

- For PDSCH DMRS, $N_{ID}^0 \in \{0,1,...,65535\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI;

- For PUSCH DMRS, $N_{ID}^0 \in \{0,1,...,65535\}$ is given by the higher-layer parameter *scramblingID0* in the *DMRS-UplinkConfig* IE if provided and the PUSCH is scheduled by DCI format 0_0 with the CRC scrambled by C-RNTI, MCS-C-RNTI, or CS-RNTI;

- $N_{ID}^{\bar{n}_{SCID}^{\bar{\lambda}}} = N_{ID}^{cell}$ otherwise;

- $\bar{n}_{SCID}^{\bar{\lambda}}$ and $\bar{\lambda}$ are given by

  o if the higher-layer parameter *dmrs-Downlink* in the *DMRS-DownlinkConfig* IE or *dmrs-Uplink* in the *DMRS-UplinkConfig* IE is provided, the corresponding $\bar{n}_{SCID}^{\bar{\lambda}}$ and $\bar{\lambda}$ are determined as

$$\bar{n}_{SCID}^{\bar{\lambda}} = \begin{cases} n_{SCID} & \lambda = 0 \text{ or } \lambda = 2 \\ 1 - n_{SCID} & \lambda = 1 \end{cases}$$

$$\bar{\lambda} = \lambda$$

  where $\lambda$ is the CDM group index.
  o otherwise by

$$\bar{n}_{SCID}^{\bar{\lambda}} = n_{SCID}$$

$$\bar{\lambda} = 0$$

The quantity $n_{SCID} \in \{0, 1\}$ is given by the DMRS sequence initialization field, if present, in the DCI associated with the PDSCH transmission if DCI format 1_1 or 1_2 is used or the PUSCH transmission if DCI format 0_1 or 0_2 is used, or indicated by the higher layer parameter *dmrs-SeqInitialization*, if present, for a Type 1 PUSCH transmission with a configured grant; otherwise $n_{SCID} = 0$.

## DMRS ports signaling

DMRS port(s) for a PDSCH or a PUSCH are signaled in the corresponding scheduling DCI. In addition to the DMRS ports, the number of CDM groups that are not allocated for PDSCH or PUSCH and also the number of front-loaded DMRS symbols are dynamically signaled in the DCI.
"Antenna port" field in DCI 1_1 is defined as following in 3GPP TS 38.212:

- Antenna port(s) - 4, 5, or 6 bits as defined by Tables 7.3.1.2.2-1/2/3/4 and Tables 7.3.1.2.2-1A/2A/3A/4A, where the number of CDM groups without data of values 1, 2, and 3 refers to CDM groups {0}, {0,1}, and {0,1,2} respectively. The antenna ports $\{p_0,..,p_{v-1}\}$ shall be determined according to the ordering of DMRS port(s) given by Tables 7.3.1.2.2-1/2/3/4 or Tables 7.3.1.2.2-1A/2A/3A/4A. When a UE receives an activation command that maps at least one codepoint of DCI field *'Transmission Configuration Indication'* to two TCI states, the UE shall use Table 7.3.1.2.2-1A/2A/3A/4A; otherwise, it shall use Tables 7.3.1.2.2-1/2/3/4. The UE can receive an entry with DMRS ports equals to 1000, 1002, 1003 when two TCI states are indicated in a codepoint of DCI field *'Transmission Configuration Indication'*.

If a UE is configured with both *dmrs-DownlinkForPDSCH-MappingTypeA* and *dmrs-DownlinkForPDSCH-MappingTypeB*, the bitwidth of this field equals max{$x_A,x_B$}, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A - x_B|$ zeros are padded in the MSB of this field, if the mapping type of the PDSCH corresponds to the smaller value of $x_A$ and $x_B$.

"Antenna port" field in DCI 1_2 and DCI 0_2 is 0 bit if higher layer parameter, *antennaPortsFieldPresentDCI-1-2* and *antennaPortsFieldPresenceDCI-0-2* respectively, is not configured. The antenna port(s) are defined assuming bit field index value 0 in Tables 7.3.1.2.2-1/2/3/4 for DCI 1_2 and 7.3.1.1.2-6 to 7.3.1.1.2-23 for DCI 0_2.

In PUSCH scheduling, the number of layers is indicated separately from DMRS ports signaling in the DCI. While for PDSCH scheduling, the number of layers and DMRS ports are signaled jointly in the DCI.

An "antenna port(s)" bit field in DCI is used for the purpose. An example for type 1 DMRS with rank=1 and up to two maximum number of front-loaded DMRS OFDM symbols for PUSCH is shown in Table 7.3.1.1.2-12 from 3gpp TS 38.212. Another example for type 1 DMRS with up to two maximum number of front-loaded DMRS OFDM symbols for PDSCH is shown in Table 7.3.1.2.2-2 from 3gpp TS 38.212.

## DCI 1_0, DCI 0_0

DCI 1_0 is fallback DCI for downlink, DCI 0_0 is fallback DCI for uplink. It is specified in NR that DCI 1_0 applies only the Type 1 DMRS, because DCI 1_0 can be used to signal paging message and system information which are broadcasted for all UEs. While DCI 0_0 can apply either Type 1 or Type2, whichever is the configured DMRS type as in DMRS-Config under PUSCH-Config or configuredGrantConfig from UE specific signaling.

## SU-MIMO and Co-scheduling of UE in the downlink

For the antenna port tables defined for each DMRS types, some of the indices are specified to be used only for SU-MIMO. For remaining indices that can be used for MU-MIMO, the UE assumes the co-scheduled UE are scheduled with same DMRS-type and same number of DMRS symbols.

For DMRS configuration type 1,

- if a UE is scheduled with one codeword and assigned with the antenna port mapping with indices of {2, 9, 10, 11 or 30} in Table 7.3.1.2.2-1 and Table 7.3.1.2.2-2 of Clause 7.3.1.2 of [5, TS 38.212], or
- if a UE is scheduled with one codeword and assigned with the antenna port mapping with indices of {2, 9, 10, 11 or 12} in Table 7.3.1.2.2-1A and {2, 9, 10, 11, 30 or 31} in Table 7.3.1.2.2-2A of Clause 7.3.1.2 of [5, TS 38.212], or
- if a UE is scheduled with two codewords,

the UE may assume that all the remaining orthogonal antenna ports are not associated with transmission of PDSCH to another UE.

For DMRS configuration type 2,

- if a UE is scheduled with one codeword and assigned with the antenna port mapping with indices of {2, 10 or 23} in Table 7.3.1.2.2-3 and Table 7.3.1.2.2-4 of Clause 7.3.1.2 of [5, TS38.212], or
- if a UE is scheduled with one codeword and assigned with the antenna port mapping with indices of {2, 10, 23 or 24} in Table 7.3.1.2.2-3A and {2, 10, 23 or 58} in Table 7.3.1.2.2-4A of Clause 7.3.1.2 of [5, TS 38.212], or
- if a UE is scheduled with two codewords,

the UE may assume that all the remaining orthogonal antenna ports are not associated with transmission of PDSCH to another UE.

## RRC configuration

There currently exist certain challenges.

## DCI overhead

In NR Rel-18 the number of orthogonal DMRS (antenna) ports will be extended from 8 to 16 for type-1 DMRS and from 12 to 24 for type-2 DMRS. This requires larger antenna port tables (i.e., more rows) compared to legacy DMRS antenna port tables, since more combinations of DMRS ports will be enabled when increasing the number of DMRS ports. With larger antenna port tables, the "antenna port" bitfield in DCI used to indicate one of the rows in an antenna port table will need more codepoints, which causes larger DCI overhead.

## Co-schedule legacy UE with Rel-18 UE

One motivation for increasing the number of orthogonal ports is to increase the number of co-scheduled MU-MIMO UE without increasing the DMRS overhead. However, for the foreseeable future, the majority of the UEs served in a commercial NR network will be legacy UEs, which do not support Rel-18 DMRS enhancements. This means that Rel-18 UEs will need to be co-scheduled with legacy UEs for MU-MIMO. The design of the Rel-18 DMRS ports is still an open issue, and it is undecided yet in 3GPP RAN1 whether the Rel-18 DMRS ports will be orthogonal to legacy DMRS ports or not. If they are not orthogonal, then a Rel-18 UE using Rel-18 DMRS cannot be co-scheduled with a legacy UE using legacy DMRS.

## SU-MIMO performance loss

One benefit of using more CDM groups is that with more CDM groups, more UEs can be co-scheduled using separated DMRS REs. An issue with this solution is the DMRS density become sparse, which means that the SU-MIMO performance will be reduced compared to using legacy DMRS design, due to longer OCC sequences in the frequency domain and increased sensitivity for delay spread in the channel. How to minimize such performance losses and sensitivity to delay spread is an open issue.

WO 2022/033555 A1 discloses a method and apparatus for improving transmission capacity. In this method, a sending device generates a demodulation reference signal (DMRS) sequence and maps it onto specific time-frequency resources for transmission (which comprise resources corresponding to different Code Division Multiplexing (CDM) groups and different subcarrier groups).

## SUMMARY

A framework and signaling are disclosed, which enable dynamic switching between legacy DMRS and Rel-18 DMRS - referred to more generally herein as "extended DMRS" - and between DMRS with different numbers of additional DMRS symbols.

In response to an indication of indices from a DMRS antenna port table, via DCI field "antenna port(s)" field, a UE applies a mapping of configured subset from the antenna port table to the codepoint when the extended DMRS type is enabled.

- Multiple subsets can be concatenated and maps to the code point to indicate antenna ports selection

    o One subset from legacy antenna port table, one subset from extended antenna port table

- Both DCI 1_1 and DCI 1_2 apply the subset of the selected antenna port selection. For DCI 1_2 when the length of the bit field for antenna port is defined, a subset of antenna port configured under DMRS-Config is further extracted from the subset for DCI 1_1.

- DCI field "antenna port(s)" the bit length is aligned across multiple DMRS configurations to the largest bit length that is required when dynamic switching indicated by MAC CE or a field in DCI is enabled.

Dynamic switching of additional DMRS symbol configuration.

- UE signal to the network that it is capable of dynamic switching between different values of number of additional DMRS symbols.
- Network configures multiple values of additional DMRS symbols in DMRS configuration.
- MAC CE or DCI field is used to indicate which value to be used as additional DMRS symbols for the scheduled/-configured PDSCH and PUSCH associated with DCI 1_1/DCI 1_2 and DCI 0_1/DCI0_2, respectively.

Dynamic switching cross multiple DMRS configuration.

- UE signal to the network that it is capable of dynamic DMRS switching cross DMRS configuration, and it indicate the expected association between DMRS configuration and one of the following identities

    o Panel, TCI group, TA group, coreset group, SRS group, antenna group.

- At least 2 DMRS configurations can be configured to the UE in higher layer

o including additional DMRS symbols and/or cyclic shift for TD-OCC on additional DMRS symbols,
o DMRS type, mapping type, number of ports, max number of layers

- UE align the DCI field according to the maximum bits needed for each DMRS configuration
- In one embodiment, switching of additional DMRS symbols and cyclic shift can be indicated via MAC CE.

  o The MAC CE contains information that is associated with a DMRS configuration:

    ▪ (explicit indication) DMRS Config ID, additional DMRS symbols and/or cyclic shift for TD-OCC over non-consecutive DMRS symbols
    ▪ activated TCI state, a coresetPoolIndx, a TA group ID, a panelID, CORESETID, an SRS resource set ID, an TCI group ID, DMRS Config ID, antenna group ID

  o A default configuration is applied before UE receives the MAC CE
  o In one embodiment, switching of additional DMRS symbols and cyclic shift can be indicated in DCI. The DCI contains one field is associated with a DMRS configuration:

    ▪ (explicit indication) DMRS Config ID, additional DMRS symbols and/or cyclic shift for TD-occ over non-consecutive DMRS symbols
    ▪ TCI state ID, a coresetPoolIndx, a TA group ID, a panelID, CORESETID, an SRS resource set ID, an TCI group ID, antenna group ID.

One embodiment relates to a method, performed by a wireless device operative in a wireless communication network having a legacy protocol for the generation, transmission, reception, and processing of DMRS and an extended protocol, different than the legacy protocol, for the generation, transmission, reception, and processing of DMRS. An indication of an extended antenna port table that includes both legacy DMRS ports and extended DMRS ports is obtained. One or more DMRS ports are determined from the extended antenna port table. The wireless device communicates with the network using the one or more determined DMRS ports.

Another embodiment relates to a wireless device operative in a wireless communication network having a legacy defined protocol for the transmission, reception, and processing of DMRS and an advanced protocol, different than the legacy protocol, for the transmission, reception, and processing of DMRS. The wireless device includes communication circuitry and processing circuitry operatively connected to the communication circuitry. The processing circuitry is configured to obtain an indication of an extended antenna port table that includes both legacy DMRS ports and extended DMRS ports; determine one or more DMRS ports from the extended antenna port table; and communicate with the network using the one or more determined DMRS ports.

Yet another embodiment relates to a method performed by a base station operative in a wireless communication network. The network has a legacy defined protocol for the transmission, reception, and processing of DMRS, and an advanced protocol, different than the legacy protocol, for the transmission, reception, and processing of DMRS. The base station indicates to a wireless device an extended antenna port table that includes both legacy DMRS ports and extended DMRS ports. An index into the extended antenna port table is sent to the wireless device, whereby the wireless device determines one or more DMRS ports. The base station communicates with the wireless device using the one or more determined DMRS ports.

Still another embodiment relates to a base station operative in a wireless communication network. The network has a legacy defined protocol for the transmission, reception, and processing of DMRS, and an advanced protocol, different than the legacy protocol, for the transmission, reception, and processing of DMRS. The base station includes communication circuitry and processing circuitry operatively connected to the communication circuitry. The processing circuitry is configured to indicate to a wireless device an extended antenna port table that includes both legacy DMRS ports and extended DMRS ports; send to the wireless device an index into the extended antenna port table whereby the wireless device determines one or more DMRS ports; and communicate with the wireless device using the one or more determined DMRS ports.

## BRIEF DESCRIPTION OF THE DRAWINGS

Figure 1A is a time/frequency diagram showing type-1 single-symbol DMRS.

Figure 1B is a time/frequency diagram showing type-1 double-symbol DMRS.

Figure 1C is a time/frequency diagram showing type-2 single-symbol DMRS.

Figure 1D is a time/frequency diagram showing type-2 double-symbol DMRS.

Figure 2 is a time diagram showing DMRS repetitions.

Figure 3 is a time diagram showing DMRS configurations for PDSCH.

Figure 4 is a flow diagram of a method of selecting between legacy and advance protocols for DMRS.

Figure 5 is a flow diagram of a method of controlling a UE to use advanced protocol DMRS.

Figure 6 is a hardware block diagram of a wireless device.

Figure 7 is a functional block diagram of a wireless device.

Figure 8 is a hardware block diagram of a network node.

Figure 9 is a functional block diagram of a network node.

Figure 10 is a diagram of a communication system.

Figure 11 is a block diagram of a UE.

Figure 12 is a block diagram of a network node.

Figure 13 is a block diagram of a host device.

Figure 14 is block diagram of a virtualization environment.

Figure 15 is a block diagram of a UE communicating with a host via a wireless network.

**DETAILED DESCRIPTION**

**Dynamic switching between legacy DMRS type and (Rel-18) extended DMRS types.**

In some of the embodiments herein it is assumed that new independent antenna port tables have been introduced for the Rel-18 DMRS types (the two new DMRS types are referred to herein as "Extended DMRS Type 1" and "Extended DMRS Type 2"). This means that there will be separate antenna port tables for "Legacy DMRS Type 1" (i.e., DMRS Type 1 in legacy NR) and for "Extended DMRS Type 1", and separate antenna port tables for "Legacy DMRS Type 2" (i.e., DMRS Type 2 in legacy NR) and for "Extended DMRS Type 2".
In one embodiment, the UE signals support in UE capability signaling to indicate if it supports dynamic switching between a first DMRS configuration and a second DMRS configuration for PDSCH/PUSCH of the same type (e.g., two DMRS configurations for PDSCH Type A or Type B; or two DMRS configurations for PUSCH Type A or Type B).
In one embodiment, the first DMRS configuration may be a "Legacy DMRS Type 1" and the second DMRS configuration may be a "Extended DMRS Type 1". Similarly, the first DMRS configuration may be a "Legacy DMRS Type 2" and the second DMRS configuration may be a "Extended DMRS Type 2".

**Dynamic switching of additional number of symbols**

In another embodiment, the first DMRS configuration comprises a first number of additional DMRS symbols (i.e., a number $n_1^{\text{add}}$ between 0-3) and the second DMRS configuration comprises a second number of additional DMRS symbols (i.e., a number $n_2^{\text{add}} \neq n_1^{\text{add}}$ between 0-3). Depending on the UEs speed or Doppler spread (which may be derived by the gNB using measurements on UL SRS or via UE feedback of such information to the gNB), the gNB dynamically indicates a first number of additional DMRS symbols or a second number of additional DMRS symbols that need to be used. For low UE speeds and/or low Doppler spreads, the UE may receive dynamic indication of the DMRS configuration corresponding to the lower number of additional DMRS symbols. For high UE speeds or high Doppler spreads, the UE may receive dynamic indication of the DMRS configuration corresponding to the higher number of additional DMRS symbols.

**New DCI field for dynamic switching**

In one embodiment, if the UE supports dynamic switching between legacy DMRS and Rel-18 DMRS, a new parameter (or flag) can be configured in "DMRS-DownlinkConfig information element" and/or "DMRS-UplinkConfig information element" indicating if the dynamic switching should be applied for DL and/or UL transmission. In one embodiment, if the dynamic switching is applied in DL, an additional single-bit bitfield is included in DL DCI formats 1_1 and 1_2, where the single bit bitfield is used to indicate if the DCI bitfield "Antenna port(s) and number of layers" included in the same DCI is associated with an antenna port table for the legacy DMRS or an antenna port table for the Rel-18 DMRS. In one embodiment, if the dynamic switching is applied in UL, an additional single-bit bitfield is included in UL DCI formats 0_1 and 0_2, where the single bit bitfield is used to indicate if the DCI bitfield "Antenna ports" included in the same DCI is associated with an antenna port table for the legacy DMRS or an antenna port table for the Rel-18 DMRS. In one embodiment, instead of introducing a new bitfield in DCI to indicate if the legacy DMRS or Rel-18 DMRS that needs to be applied, the DCI bitfield "Antenna port(s) and number of layers" for DL or "Antenna ports" for UL can be extended with more codepoints (and potentially more bits), and where a first subset of codepoints are used to indicate an entry in an antenna port table associated with legacy DMRS and another (distinct) set of codepoints are used to indicate an entry in an antenna port table for Rel-18 DMRS. In another alternative embodiment, the DCI bitfield "Antenna port(s) and number of layers" for DL or "Antenna ports" for UL can be extended with more bits wherein a first number of bits in the "Antenna port(s) and number of layer"/"Antenna ports" field(s) are used to indicate whether an entry in an antenna port table associated with legacy DMRS or an entry in an antenna port table for Rel-18 DMRS.

New MAC-CE for dynamic switching

In one embodiment, a new MAC-CE is introduced to dynamically indicate if legacy DMRS or Rel-18 DMRS should be used for DL and or UL communication. Table 3 illustrates one schematic example of a new MAC-CE used to indicate if legacy DMRS or Rel-18 DMRS should be applied for DL (based on the single-bit bitfield "DL DMRS type") and legacy DMRS or Rel-18 DMRS should be applied for UL (based on the single-bit bitfield "UL DMRS type"). Note that other bitfields indicating other information to the UE also can be included in the MAC-CE, in the same or different octaves.

Table 3

| R | R | R | R | R | R | UL DMRS type | DL DMRS type | Oct 1 |
|---|---|---|---|---|---|---|---|---|

In one embodiment, the MAC-CE also includes other DMRS parameters for DL and/or UL, such as one or more of:

- dmrs-Type, as specified TS 38.331
- dmrs-Type-Rel18, which might be a new parameter introduced in TS 38.331 in Rel-18 to indicate if the "Extended DMRS Type 1" or the "Extended DMRS Type 2" should be applied for DL and/or UL DMRS
- dmrs-AdditionalPosition, as specified TS 38.331
- maxLength, as specified TS 38.331.

In these embodiments it is assumed that new antenna port tables have been introduced in Rel-18, where the new antenna port tables include both rows/entries associated with a legacy DMRS type and other rows/entries associated with a Rel-18 DMRS type. This means that a UE can switch between legacy DMRS and Rel-18 DMRS using a single bitfield in DCI that is associated with a single antenna port table.

For both legacy DMRS type 1 and legacy DMRS type 2, a DMRS parameter configuration table is defined in TS 38.211 (see Table 4 below), where each row of the table consists of a unit port number P for the corresponding DMRS type. Then in 38.212, antenna port tables are defined where each row consists of a table index set of antenna port numbers that maps to the DMRS parameter configuration table, number of DMRS CDM group(s) without data, and number of front-loaded symbols if applicable.

Table 4 (Table 7.4.1.1.2-5: PDSCH DMRS time index *l'* and antenna ports *p*).

| Single or double symbol DMRS | *l'* | Supported antenna ports *p* | |
| | | Configuration type 1 | Configuration type 2 |
|---|---|---|---|
| single | 0 | 1000 - 1003 | 1000 - 1005 |
| double | 0, 1 | 1000 - 1007 | 1000 - 1011 |

In one embodiment, the DMRS parameter configuration table and new antenna port tables reuse the legacy antenna port numbers for legacy DMRS and uses new antenna port numbers for Rel-18 DMRS (which differs from the conventional way of numbering the antenna ports, where first the DMRS (antenna) ports are numbered according to first single symbol DMRS and then double symbol DMRS), as illustrated in Table 1.

For "Extended DMRS type 1", the DMRS parameter configuration table consists of rows of antenna port P numbering from 1008 to 1023 for double-symbol DMRS and 1004 to 1011 for single-symbol DMRS. For extended DMRS type 2, the parameter configuration table consists of rows of antenna port P numbering from 1012 to 1035 for double-symbol DMRS and 1006 to 1017 for single-symbol DMRS. This numbering may simplify UE implementation, because a UE supporting the new extended type can reuse its implementation for the existing type, only a few new rows are needed for supporting more MU-MIMO combinations and thus added to the existing table. It is also beneficial for backward compatibility of legacy DMRS-Types.

Table 1: Alt 1 for numbering of antenna ports for new DMRS types for PDSCH.

| DMRS duration | *l'* | Supported antenna ports *p̃* | |
| | | Configuration type 1 Extension | Configuration type 2 Extension |
|---|---|---|---|
| single-symbol DMRS | 0 | 1004 - 1011 | 1006 -1017 |
| double-symbol DMRS | 0, 1 | 1008 - 1023 | 1012 - 1035 |

In one embodiment the antenna port table for extended type is defined by adding new rows to the existing Type1/2 table, those new rows contain only the antenna port numbering for extended type as shown in Table 5.

Another alternative is Alt 2 as shown in the below table, indexing the antenna port from 1000 and, hence, overwriting the legacy DMRS ports for UEs configured with Rel-18 DMRS.

Table 6: Alt 2 for numbering of antenna ports for new DMRS types for PDSCH.

| DMRS duration | *l'* | Supported antenna ports *p̃* | |
| | | Configuration type 1 Extension | Configuration type 2 Extension |
|---|---|---|---|
| single-symbol DMRS | 0 | 1000 -1007 | 1000 -1011 |
| double-symbol DMRS | 0, 1 | 1000 -1015 | 1000 -1023 |

In another embodiment, assuming that legacy DMRS ports are included in the set of extended DMRS ports, the set of extended DMRS ports that are the same as legacy DMRS ports reuse the antenna port numbers in Table 4 whereas the set of extended DMRS ports that are different from legacy ports are assigned new numbers. An example of this embodiment is shown in Table 8.

Table 2: Alt 3 for numbering of antenna ports for new DMRS types for PDSCH

| DMRS duration | *l'* | Supported antenna ports *p̃* | |
| | | Configuration type 1 Extension | Configuration type 2 Extension |
|---|---|---|---|
| single-symbol DMRS | 0 | 1000-1003, 1008-1011 | 1000-1005, 1012-1017 |
| double-symbol DMRS | 0, 1 | 1000-1007, 1012-1015 | 1000-1011, 1018-1023 |

Subset selection of indices from antenna port table to reduce DCI overhead

The bitfield "Antenna port(s) and number of layers" in the DCI 1_1/1_2 is up to 6 bits, and the bitfield "antenna port(s)"in DCI 0_1/0_2 is up to 5 bits, which is very large already. When using new antenna port tables consisting of both legacy DMRS ports and Rel-18 DMRS ports, the DCI overhead will increase even more if additional bits are added to indicate the antenna ports(s).

Hence, in one embodiment, only a subset of the new antenna port tables is configured for a UE via higher-layer signaling. The subset of the new antenna port tables can consist of both legacy DMRS ports and Rel-18 DMRS ports. The subset selection of indices in an antenna port table can be either explicitly or implicitly configured as described below.

**Explicit subset selection configured by higher layer**

A subset selection of indices from antenna port table(s) is configured in dmrs-DownlinkConfig to indicate a selection of the subset of rows from the extended antenna port table. The decision on bit map is based on gNB choice of the scheduling to focus on higher rank transmission, or to support larger number of co-scheduled users, or to support C-JT. In one embodiment, only the column of 1 codeword in the antenna port table apply this subset selection (because the number of rows for 2 codewords is small).

In one embodiment, a separate subset selection configuration is provided to 2 codewords column of the antenna port table(s), as shown below:

**DMRS-DownlinkConfig information element**

```
-- ASN1START
-- TAG-DMRS-DOWNLINKCONFIG-START

DMRS-DownlinkConfig ::=            SEQUENCE {
    dmrs-Type                     ENUMERATED {type2}
OPTIONAL,    -- Need S
    dmrs-AdditionalPosition       ENUMERATED {pos0, pos1, pos3}
OPTIONAL,    -- Need S
    maxLength                     ENUMERATED {len2}
OPTIONAL,    -- Need S
    scramblingID0                 INTEGER (0..65535)
OPTIONAL,    -- Need S
    scramblingID1                 INTEGER (0..65535)
OPTIONAL,    -- Need S
    phaseTrackingRS               SetupRelease { PTRS-
DownlinkConfig  }                        OPTIONAL,    --
Need M
    ...,
    [[
    dmrs-Downlink-r16             ENUMERATED {enabled}
OPTIONAL    -- Need R
    ]]
    dmrs-extended-Type-r18               ENUMERATED
{extendedType1, extendedType2}
    oneCodewordAntennaPortTableSubset    BIT STRING (SIZE(64))

    twoCodewordAntennaPortTableSubset     BIT STRING (SIZE(64))
    }
```

For uplink, the subset selection of indices from antenna port table can be configured for all the ranks that are smaller than the configured maxRank in PUSCH-Config, as shown below:

**DMRS-UplinkConfig information element**

```
-- ASN1START
-- TAG-DMRS-UPLINKCONFIG-START

DMRS-UplinkConfig ::=                    SEQUENCE {
    dmrs-Type                               ENUMERATED {type2}
OPTIONAL,    -- Need S
    dmrs-AdditionalPosition                 ENUMERATED {pos0, pos1, pos3}
OPTIONAL,    -- Need S
    phaseTrackingRS                         SetupRelease { PTRS-UplinkConfig }
OPTIONAL,    -- Need M
    maxLength                               ENUMERATED {len2}
OPTIONAL,    -- Need S
    transformPrecodingDisabled              SEQUENCE {
        scramblingID0                           INTEGER (0..65535)
OPTIONAL,    -- Need S
        scramblingID1                           INTEGER (0..65535)
OPTIONAL,    -- Need S
        ...,
        [[
        dmrs-Uplink-r16                         ENUMERATED {enabled}
OPTIONAL    -- Need R
        ]]
    }
OPTIONAL,    -- Need R
    transformPrecodingEnabled               SEQUENCE {
        nPUSCH-Identity                         INTEGER(0..1007)
OPTIONAL,    -- Need S
        sequenceGroupHopping                    ENUMERATED {disabled}
OPTIONAL,    -- Need S
        sequenceHopping                         ENUMERATED {enabled}
OPTIONAL,    -- Need S
        ...,
        [[
        dmrs-UplinkTransformPrecoding-r16  SetupRelease {DMRS-
UplinkTransformPrecoding-r16}               OPTIONAL    -- Need M
        ]]
    }
OPTIONAL,    -- Need R
    ...
}

DMRS-UplinkTransformPrecoding-r16  ::=  SEQUENCE {
    pi2BPSK-ScramblingID0                   INTEGER(0..65535)
OPTIONAL,    -- Need S
    pi2BPSK-ScramblingID1                   INTEGER(0..65535)
OPTIONAL    -- Need S

    dmrs-extended-Type-r18                  ENUMERATED {extendedType1, extendedType2}
    antennaPortTableSubset                  CHOICE{
    rank1                                   BIT STRING (SIZE(32)),
    rank2                                   BIT STRING (SIZE(18)),
    rank3                                   BIT STRING (SIZE(5))}
}

}
```

The length of the DCI field "antenna ports" is decided by the subset configuration. For example, if 8 is the number of bits set to "1" if bit map is applied to indicate the select the indices, the bit field would need 3 bits.If multiple bit maps are configured, the DCI field is decided by the largest number of bits which is "1" across the bit maps. For example, if for DMRS-UplinkConfig the bit map for rank1, rank2 and rank3 is configured as "1110 1100 0000 0000 0000 0000 0000 0000", "1100 1000 1100 1000 00", "1000 0", where the number of bits of value "1" is 5,6,1 correspondingly, the bit field length is decided by the largest number 6, ceil(log2 6) = 3.

For short DCI format DCI1_2, if antennaPortFieldPresenceDCI-1-2 is not configured, antenna port(s) are defined assuming bit field index value 0 after applied the configured subset selection.

For short DCI format DCI1_2, if antennaPortFieldPresenceDCI-1-2 is not configured, antenna port(s) are defined assuming bit field index value 0 after applied the configured subset selection.

Implicit subset selection configured by higher layer

In this method the subset selection is implicitly indicated by configuring a bit field length "antennaPortsFieldLengthDCI-X_Y" for "antenna port(s)" field for DCI 1_1 and/or DCI 1_2 in PDSCH-Config and DCI 0_1 and/or DCI 0_2 in PUSCH-Config respectively. Only the rows from the lower indices of antenna port table can be selected if the preconfigured size is smaller than the number of bits needed for the whole table. In one alternative, the starting index of the antenna port table can be configured.

Concatenation of TypeX and extended TypeX antenna port(s)

In this method, for each DMRS type -- Type1, Type2, extended Type1, extended Type2 - - a subset of the antenna port table can be configured by higher layer.
As is shown in the example below, if extended-dmrs-Type is enabled: 2 subsets of antenna port tables associated with DMRS Type 1 and DMRS-Type 1-extend, can be configured and concatenated to map to the "antenna port(s)" DCI field, and if dmrs-Type is not configured as type2 (which means the default Type type1 is configured); 2 subsets of antenna port tables associated with DMRS Type 2 and DMRS type 2-extend can be concatenated and map to the antenna port DCI field if dmrs-Type is configured to type2. In one embodiment the subset selection of antenna port table can be indicated to UE in MAC CE instead of RRC.
For example, if in DMRS-DownlinkConfig the extended-dmrs-Type is set to enabled, and the oneCodewordAntennaPortTableSubset0 is configured as "1100 1000 1010 0000 0000 0000 0000 0000 0000 0000 0000 0000 1010 0000 0000 0000", oneCodewordAntennaPortTableSubset1 is configured as "1111 1000 1011 0000 0000 0000 0000 0000 0000 0000 0000 0000 0000 0000 0000 0000", the antenna port table indices $\{0,1,4,8,10,48,50\}$ is the subset selected from the Type1 legacy table, the antenna port table indices $\{0,1,2,3,4,8,10,11\}$ is the subset selected from the extended Type1 table. The code point in the DCI field "antenna port(s)" is mapped to the selected subsets of the legacy table and the extended table. In this example, subset0 contains 7 indices, subset1 contains 8 indices, in total 7+8 =15 indices can be indicated, ceil(log215) = 4 bits is needed for the "antenna Port" DCI field. The indices are mapped to the codepoint in ascendant order. If a codepoint 0011 is indicated to the UE, the UE would receive the PDSCH applying the index with value 8 in the legacy antenna port table.
The example configuration above shows the bit map based on subset selection, which provides the maximum flexibility from gNB perspective. The subset selection may also be based on pre-defined groups of indices, for example, row indices $\{0,1,6,7,8,9,10\}$ is defined as group 0, row indices $\{0,1,2,3,4,5\}$ is defined as group 0.
In one embodiment multiple consecutive rows can be configured in PDSCH-Config with at least one consecutive row selection from the legacy antenna port table for Type1/Type2, and one consecutive row selection from the new antenna port table extendedType1/extendedType2.
Enable dynamic switch between type I and Type I-extend, between Type II and Type II-extend, and between Type I, Type II and Type II-extend. For Type I-extend antenna table design, a subset of existing Type 1 antenna port table configuration is included in the new Type I-extend antenna port table. For type II-extend, a subset of existing Type II antenna port table configuration is included in the new Type II- extend antenna port table.
In one embodiment the legacy port table corresponding to codepoint 0/00 is always included in the selected antenna ports. Codepoint 0 and 00 is used to decide the PT-RS, it is also used to decide the antenna port selection using short DCI.
In one embodiment, DCI 1_0 and DCI 0_0 scrambled with C-RNTI, MCS-C-RNTI, CS-RNTI can be configured with one of the indices indicated by the subset selection.
In one embodiment, the number of bits used for DCI field "antenna ports" in DCI 0_1/0_2 and DCI 1_1/1_2 can be configured to use a subset of the rows from legacy table and a subset of the rows from new antenna port mapping table when the Rel-18 DMRS is configured. The partial or the rows can be defined to start from a first value index in the legacy table to be mapped to the lowest codepoint of the available codepoints defined by RRC configuration, and the index from the table in ascending order is mapped to the codepoint in ascending order. A second value index in the new table is configured as the lowest value index to be mapped to the lowest codepoint among remaining available codepoint, then in ascending order of value index the rows from the new table are mapped to the codepoint. Switching between the legacy and Rel-18 table are dynamically indicated by applying different codepoint of "antenna ports" in the DCI 0_1 and 0_2.

**Explicit dynamic switching using DCI or MAC CE indication**

In this method the switching between legacy Type and the extended Type is explicitly indicated in DCI or MAC CE.
A bit field in the DCI can be used for the UE to dynamically switch between the legacy DMRS type antenna port table and the new extended type antenna port table. Dynamic switching between the DMRS types can be configure in PDSCH-Config and/or PUSCH-Config.

In one embodiment, multiple subset selection can be configured by higher layer for each DMRS type, the additional position can be configured to be different for Type1 and extendedType1, MAC CE or DCI is used to dynamically switch between the DMRS types and applies the subset selection for the corresponding DMRS type.

In one embodiment, additional DMRS symbol position can be configured differently for Extended Type and legacy type, via dynamic switching between the legacy and Extended type, different additional DMRS symbols can be dynamically switched.

**DMRS-DownlinkConfig information element**

```
-- ASN1START
-- TAG-DMRS-DOWNLINKCONFIG-START

DMRS-DownlinkConfig ::=        SEQUENCE {
    dmrs-Type                 ENUMERATED {type2}
OPTIONAL,   -- Need S
    dmrs-AdditionalPosition       ENUMERATED {pos0, pos1, pos3}
OPTIONAL,   -- Need S
    maxLength                 ENUMERATED {len2}
OPTIONAL,   -- Need S
    scramblingID0              INTEGER (0..65535)
OPTIONAL,   -- Need S
    scramblingID1              INTEGER (0..65535)
OPTIONAL,   -- Need S
    phaseTrackingRS               SetupRelease { PTRS-DownlinkConfig  }
OPTIONAL,   -- Need M
    ...,
    [[
    dmrs-Downlink-r16         ENUMERATED {enabled}
OPTIONAL   -- Need R
      ]]

    extended-dmrs-Type            ENUMERATED {enabled}
    antennaPortSwitching          ENUMERATED {enabled}
    antennaPortTableSubset0       BIT STRING (SIZE(64))
    antennaPortTableSubset1       BIT STRING (SIZE(64))
    dmrs-AdditionalPosition-Extended  ENUMERATED {pos0, pos1, pos3}

}
```

**Dynamic switching cross multiple DMRS configuration**

This section is related to Multi TRP, multi-TA, multi-Panel, C-JT, Unified TCI enhancement in Rel-18, we assume some identities are defined for multi-TRP, multi-TA, multi-Panel, C-JT, TCI-group that need to indicate UE transmitting and receiving antenna constellation. The identity can be : coreset, PoolIndx, TA group ID, panelID, CORESETID, SRS resource set ID, TCI group ID, DMRS Config ID, antenna group ID.

In one embodiment, one DMRS configuration can be associated one such ID, and the ID can be indicated in DCI or MAC CE. UE applies the corresponding DMRS configuration associated with the ID after it receives PDCCH or MACCE indication. The DCI field need to be aligned with the largest bit field for each configuration.

**Methods and apparatuses**

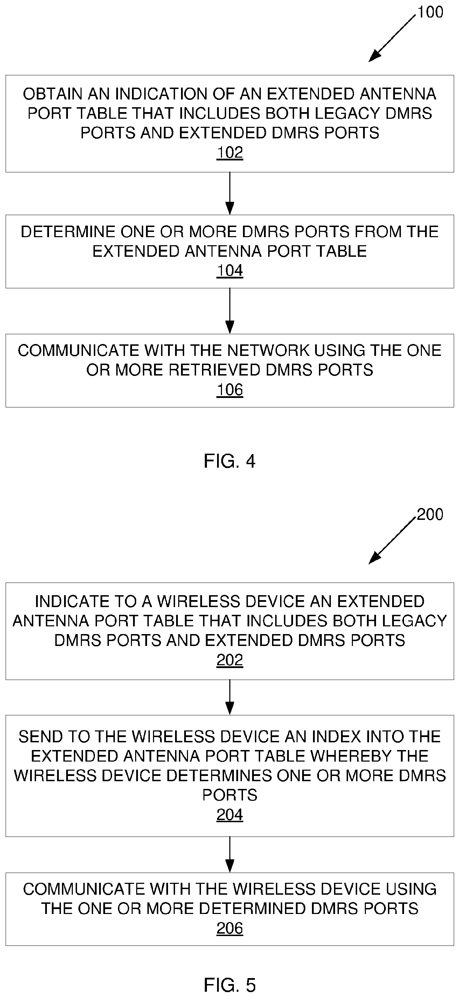

Figure 4 depicts a method 100 in accordance with particular embodiments. The method 100 is performed by a wireless device operative in a wireless communication network having a legacy protocol for the generation, transmission, reception, and processing of Demodulation Reference Symbols (DMRS) and an extended protocol, different than the legacy protocol, for the generation, transmission, reception, and processing of DMRS. The extended DMRS protocol is also referred to as Rel-18 DMRS herein. An indication of an extended antenna port table that includes both legacy DMRS ports and extended DMRS ports is obtained (block 102). One or more DMRS ports are determined from the extended antenna port table (block 104). The wireless device communicates with the network using the one or more determined DMRS ports (block 106).

Figure 5 depicts a method 200 in accordance with other particular embodiments. The method 200 is performed by a base station operative in a wireless communication network. The network has a legacy defined protocol for the transmission, reception, and processing of DMRS, and an extended protocol, different than the legacy protocol, for the transmission, reception, and processing of DMRS. The extended DMRS protocol is also referred to as Rel-18 DMRS herein. The base station indicates to a wireless device an extended antenna port table that includes both legacy DMRS ports and extended DMRS ports (block 202). An index into the extended antenna port table is sent to the wireless device, whereby the wireless device determines one or more DMRS ports (block 204). The base station communicates with the wireless device using the one or more determined DMRS ports (block 206).

Apparatuses described herein may perform the methods 100, 200 herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

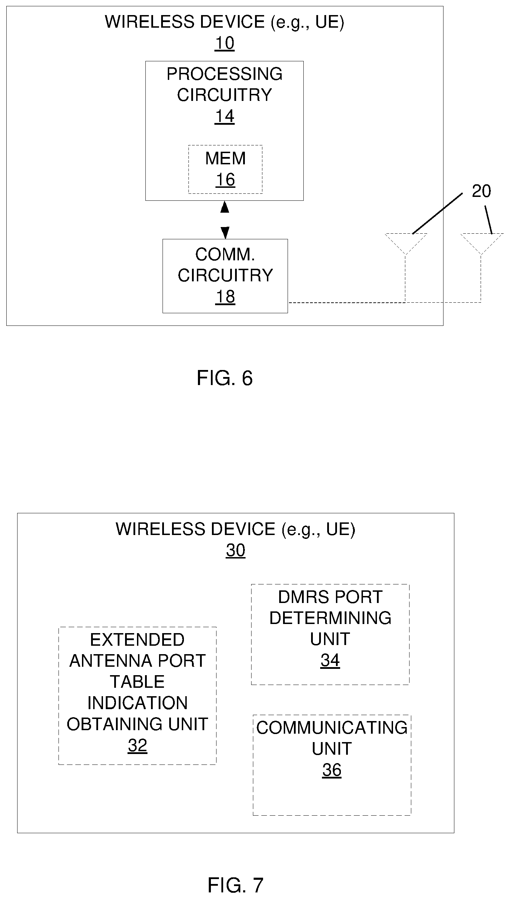

Figure 6 for example illustrates a hardware block diagram of a wireless device 10 as implemented in accordance with one or more embodiments. As shown, the wireless device 10 includes processing circuitry 14 and communication circuitry 18. The communication circuitry 18 (*e.g.*, radio circuitry) is configured to transmit and/or receive information to and/or from one or more other nodes, *e.g.*, via any communication technology. Such communication may occur via one or more antennas 20 that are either internal or external to the wireless device 10, as indicated by dashed lines. The processing circuitry 14 is configured to perform processing described above, such as by executing instructions stored in memory 16. The processing circuitry 14 in this regard may implement certain functional means, units, or modules.

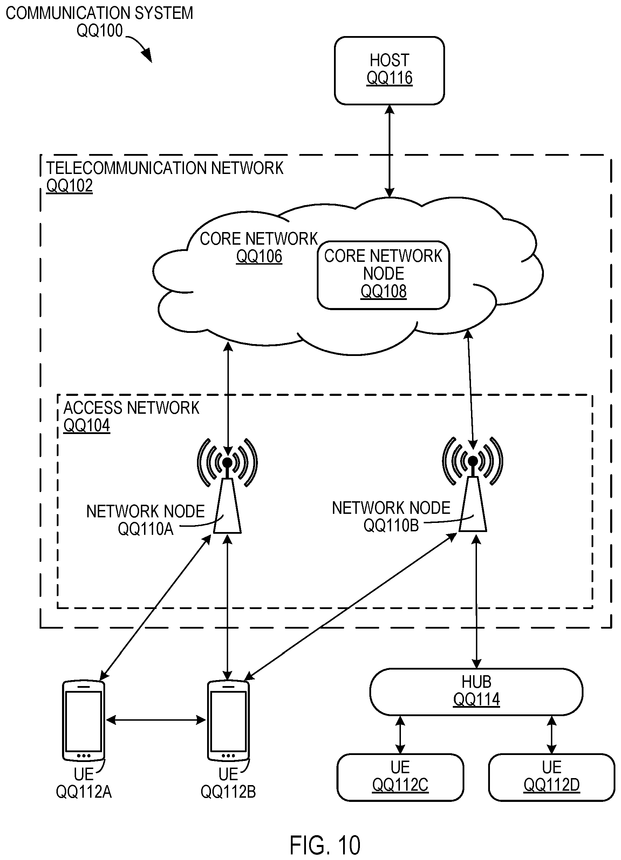

Figure 7 illustrates a functional block diagram of a wireless device 30 in a wireless network according to still other embodiments (for example, the wireless network shown in Figure 10). As shown, the wireless device 30 implements various functional means, units, or modules, *e.g.*, via the processing circuitry 14 in Figure 6 and/or via software code. These functional means, units, or modules, *e.g.*, for implementing the method 100 herein, include for instance: extended antenna port table indication obtaining unit 32, DMRS port determining unit 34, and communicating unit 36. Extended antenna port table indication obtaining unit 32 is configured to obtain an indication of an extended antenna port table that includes both legacy DMRS ports and extended DMRS ports. DMRS port determining unit 34 is configured to determine one or more DMRS ports from the extended antenna port table. Communicating unit 36 is configured to communicate with the network using the one or more retrieved DMRS ports.

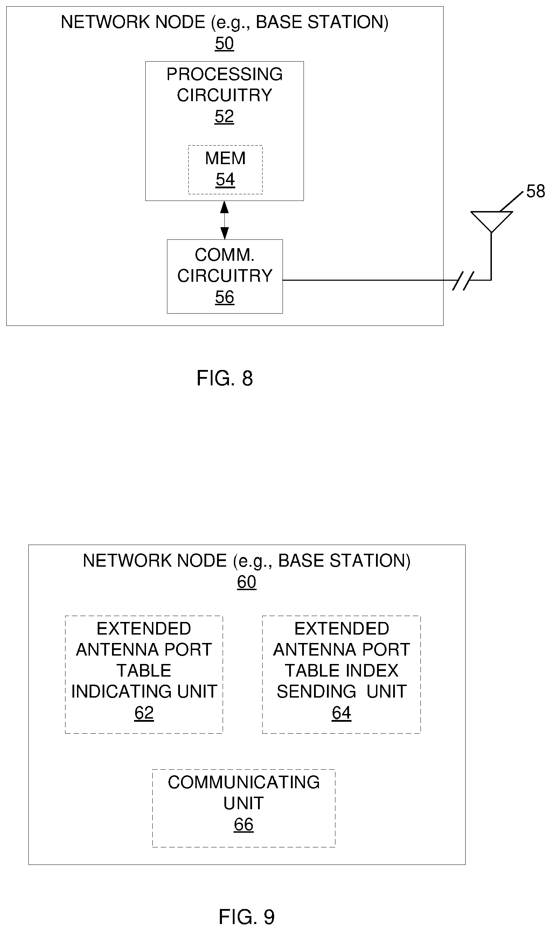

Figure 8 illustrates a hardware block diagram of a network node 50 as implemented in accordance with one or more embodiments. As shown, the network node 50 includes processing circuitry 52 and communication circuitry 56. The communication circuitry 56 is configured to transmit and/or receive information to and/or from one or more other nodes, *e.g.*, via any communication technology. The network node 50 may function as a base station (*e.g.*, eNB, gNB, etc.), any may wirelessly communicate with a plurality of wireless devices 10, 30 via one or more antennas 58. As indicated by the broken line, the antennas 58 may be located remotely from the network node 50, such as on a tower or building. The processing circuitry 14 is configured to perform processing described above, such as by executing instructions stored in memory 54. Although represented as being within the network node 50, those of skill in the art understand that some or all of the processing circuitry 54 may be implemented as virtualized servers in a data center, *e.g.*, in the so-called cloud. The processing circuitry 54 in this regard may implement certain functional means, units, or modules.

Figure 9 illustrates a functional block diagram of a network node 60 in a wireless network according to still other embodiments (for example, the wireless network shown in Figure 10). As shown, the network node 60 implements various functional means, units, or modules, *e.g.*, via the processing circuitry 54 in Figure 8 and/or via software code. These functional means, units, or modules, *e.g.*, for implementing the method 200 herein, include for instance: extended antenna port table indicating unit 32, extended antenna port table index sending unit 34, and communicating unit 36. Extended antenna port table indicating unit 32 is configured to indicate to a wireless device an extended antenna port table that includes both legacy DMRS ports and extended DMRS ports. Extended antenna port table index sending unit 34 is configured to send to the wireless device an index into the extended antenna port table, whereby the wireless device determines one or more DMRS ports. Communicating unit 36 is configured to communicate with the wireless device using the one or more determined DMRS ports.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

### Network description and over the top (OTT) embodiments

Figure 10 shows an example of a communication system QQ100 in accordance with some embodiments.

In the example, the communication system QQ100 includes a telecommunication network QQ102 that includes an access network QQ104, such as a radio access network (RAN), and a core network QQ106, which includes one or more core network nodes QQ108. The access network QQ104 includes one or more access network nodes, such as network nodes QQ110a and QQ110b (one or more of which may be generally referred to as network nodes QQ110), or any other similar 3rd Generation Partnership Project (3GPP) access node or non-3GPP access point. The network nodes QQ110 facilitate direct or indirect connection of user equipment (UE), such as by connecting UEs QQ112a, QQ112b, QQ112c, and QQ112d (one or more of which may be generally referred to as UEs QQ112) to the core network QQ106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system QQ100 may include any number of wired or wireless networks, network nodes, UEs, and/or any other components or systems that may facilitate or participate in the communication of data and/or signals whether via wired or wireless connections. The communication system QQ100 may include and/or interface with any type of communication, telecommunication, data, cellular, radio network, and/or other similar type of system.

The UEs QQ112 may be any of a wide variety of communication devices, including wireless devices arranged, configured, and/or operable to communicate wirelessly with the network nodes QQ110 and other communication devices. Similarly, the network nodes QQ110 are arranged, capable, configured, and/or operable to communicate directly or indirectly with the UEs QQ112 and/or with other network nodes or equipment in the telecommunication network QQ102 to enable and/or provide network access, such as wireless network access, and/or to perform other functions, such as administration in the telecommunication network QQ102.

In the depicted example, the core network QQ106 connects the network nodes QQ110 to one or more hosts, such as host QQ116. These connections may be direct or indirect via one or more intermediary networks or devices. In other examples, network nodes may be directly coupled to hosts. The core network QQ106 includes one more core network nodes (e.g., core network node QQ108) that are structured with hardware and software components. Features of these components may be substantially similar to those described with respect to the UEs, network nodes, and/or hosts, such that the descriptions thereof are generally applicable to the corresponding components of the core network node QQ108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host QQ116 may be under the ownership or control of a service provider other than an operator or provider of the access network QQ104 and/or the telecommunication network QQ102, and may be operated by the service provider or on behalf of the service provider. The host QQ116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system QQ100 of Figure 10 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (*e.g.*, 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network QQ102 is a cellular network that implements 3GPP standardized features. Accordingly, the telecommunications network QQ102 may support network slicing to provide different logical networks to different devices that are connected to the telecommunication network QQ102. For example, the telecommunications network QQ102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs QQ112 are configured to transmit and/or receive information without direct human interaction. For instance, a UE may be designed to transmit information to the access network QQ104 on a predetermined schedule, when triggered by an internal or external event, or in response to requests from the access network QQ104. Additionally, a UE may be configured for operating in single- or multi-RAT or multi-standard mode. For example, a UE may operate with any one or combination of Wi-Fi, NR (New Radio) and LTE, *i.e.* being configured for multi-radio dual connectivity (MR-DC), such as E-UTRAN (Evolved-UMTS Terrestrial Radio Access Network) New Radio - Dual Connectivity (EN-DC).

In the example, the hub QQ114 communicates with the access network QQ 104 to facilitate indirect communication between one or more UEs (*e.g.*, UE QQ112c and/or QQ112d) and network nodes (*e.g.*, network node QQ110b). In some examples, the hub QQ114 may be a controller, router, content source and analytics, or any of the other communication devices described herein regarding UEs. For example, the hub QQ114 may be a broadband router enabling access to the core network QQ106 for the UEs. As another example, the hub QQ114 may be a controller that sends commands or instructions to one or more actuators in the UEs. Commands or instructions may be received from the UEs, network nodes QQ110, or by executable code, script, process, or other instructions in the hub QQ114. As another example, the hub QQ114 may be a data collector that acts as temporary storage for UE data and, in some embodiments, may perform analysis or other processing of the data. As another example, the hub QQ114 may be a content source. For example, for a UE that is a VR headset, display, loudspeaker or other media delivery device, the hub QQ114 may retrieve VR assets, video, audio, or other media or data related to sensory information via a network node, which the hub QQ114 then provides to the UE either directly, after performing local processing, and/or after adding additional local content. In still another example, the hub QQ114 acts as a proxy server or orchestrator for the UEs, in particular if one or more of the UEs are low energy IoT devices.

The hub QQ114 may have a constant/persistent or intermittent connection to the network node QQ110b. The hub QQ114 may also allow for a different communication scheme and/or schedule between the hub QQ114 and UEs (*e.g.*, UE QQ112c and/or QQ112d), and between the hub QQ114 and the core network QQ106. In other examples, the hub QQ114 is connected to the core network QQ106 and/or one or more UEs via a wired connection. Moreover, the hub QQ114 may be configured to connect to an M2M service provider over the access network QQ104 and/or to another UE over a direct connection. In some scenarios, UEs may establish a wireless connection with the network nodes QQ110 while still connected via the hub QQ114 via a wired or wireless connection. In some embodiments, the hub QQ114 may be a dedicated hub - that is, a hub whose primary function is to route communications to/from the UEs from/to the network node QQ110b. In other embodiments, the hub QQ114 may be a non-dedicated hub - that is, a device which is capable of operating to route communications between the UEs and network node QQ110b, but which is additionally capable of operating as a communication start and/or end point for certain data channels.

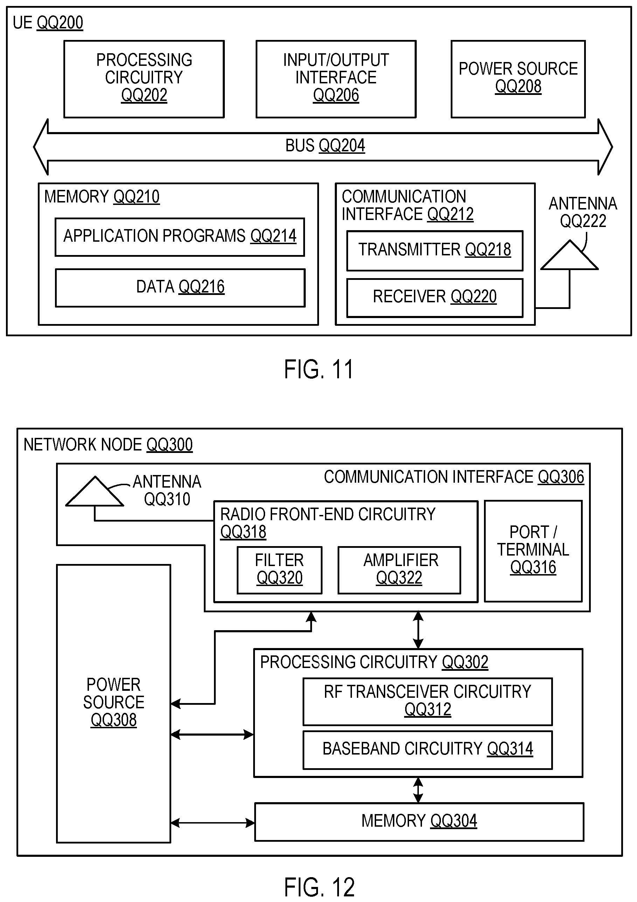

Figure 11 shows a UE QQ200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (*e.g.*, a smart sprinkler controller). Alternatively, a UE may represent a device that is not intended for sale to, or operation by, an end user but which may be associated with or operated for the benefit of a user (*e.g.*, a smart power meter).

The UE QQ200 includes processing circuitry QQ202 that is operatively coupled via a bus QQ204 to an input/output interface QQ206, a power source QQ208, a memory QQ210, a communication interface QQ212, and/or any other component, or any combination thereof. Certain UEs may utilize all or a subset of the components shown in Figure 11. The level of integration between the components may vary from one UE to another UE. Further, certain UEs may contain multiple instances of a component, such as multiple processors, memories, transceivers, transmitters, receivers, etc.

The processing circuitry QQ202 is configured to process instructions and data and may be configured to implement any sequential state machine operative to execute instructions stored as machine-readable computer programs in the memory QQ210. The processing circuitry QQ202 may be implemented as one or more hardware-implemented state machines (*e.g.*, in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry QQ202 may include multiple central processing units (CPUs).

In the example, the input/output interface QQ206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE QQ200. Examples of an input device include a touch-sensitive or presence-sensitive display, a camera (*e.g.*, a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source QQ208 is structured as a battery or battery pack. Other types of power sources, such as an external power source (*e.g.*, an electricity outlet), photovoltaic device, or power cell, may be used. The power source QQ208 may further include power circuitry for delivering power from the power source QQ208 itself, and/or an external power source, to the various parts of the UE QQ200 via input circuitry or an interface such as an electrical power cable. Delivering power may be, for example, for charging of the power source QQ208. Power circuitry may perform any formatting, converting, or other modification to the power from the power source QQ208 to make the power suitable for the respective components of the UE QQ200 to which power is supplied.

The memory QQ210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory QQ210 includes one or more application programs QQ214, such as an operating system, web browser application, a widget, gadget engine, or other application, and corresponding data QQ216. The memory QQ210 may store, for use by the UE QQ200, any of a variety of various operating systems or combinations of operating systems.

The memory QQ210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory QQ210 may allow the UE QQ200 to access instructions, application programs and the like, stored on transitory or non-transitory memory media, to offload data, or to upload data. An article of manufacture, such as one utilizing a communication system may be tangibly embodied as or in the memory QQ210, which may be or comprise a device-readable storage medium.

The processing circuitry QQ202 may be configured to communicate with an access network or other network using the communication interface QQ212. The communication interface QQ212 may comprise one or more communication subsystems and may include or be communicatively coupled to an antenna QQ222. The communication interface QQ212 may include one or more transceivers used to communicate, such as by communicating with one or more remote transceivers of another device capable of wireless communication (*e.g.*, another UE or a network node in an access network). Each transceiver may include a transmitter QQ218 and/or a receiver QQ220 appropriate to provide network communications (*e.g.*, optical, electrical, frequency allocations, and so forth). Moreover, the transmitter QQ218 and receiver QQ220 may be coupled to one or more antennas (*e.g.*, antenna QQ222) and may share circuit components, software or firmware, or alternatively be implemented separately.

In the illustrated embodiment, communication functions of the communication interface QQ212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface QQ212, via a wireless connection to a network node. Data captured by sensors of a UE can be communicated through a wireless connection to a network node via another UE. The output may be periodic (*e.g.*, once every 15 minutes if it reports the sensed temperature), random (*e.g.*, to even out the load from reporting from several sensors), in response to a triggering event (*e.g.*, when moisture is detected an alert is sent), in response to a request (*e.g.*, a user initiated request), or a continuous stream (*e.g.*, a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE QQ200 shown in Figure 11.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (*e.g.* by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 12 shows a network node QQ300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (*e.g.*, radio access points), base stations (BSs) (*e.g.*, radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (*e.g.*, Evolved Serving Mobile Location Centers (E-SMLCs)), and/or Minimization of Drive Tests (MDTs).

The network node QQ300 includes a processing circuitry QQ302, a memory QQ304, a communication interface QQ306, and a power source QQ308. The network node QQ300 may be composed of multiple physically separate components (*e.g.*, a NodeB component and a RNC component, or a BTS component and a BSC component, etc.), which may each have their own respective components. In certain scenarios in which the network node QQ300 comprises multiple separate components (*e.g.*, BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node QQ300 may be configured to support multiple radio access technologies (RATs). In such embodiments, some components may be duplicated (*e.g.*, separate memory QQ304 for different RATs) and some components may be reused (*e.g.*, a same antenna QQ310 may be shared by different RATs). The network node QQ300 may also include multiple sets of the various illustrated components for different wireless technologies integrated into network node QQ300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node QQ300.

The processing circuitry QQ302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ300 components, such as the memory QQ304, to provide network node QQ300 functionality.

In some embodiments, the processing circuitry QQ302 includes a system on a chip (SOC). In some embodiments, the processing circuitry QQ302 includes one or more of radio frequency (RF) transceiver circuitry QQ312 and baseband processing circuitry QQ314. In some embodiments, the radio frequency (RF) transceiver circuitry QQ312 and the baseband processing circuitry QQ314 may be on separate chips (or sets of chips), boards, or units, such as radio units and digital units. In alternative embodiments, part or all of RF transceiver circuitry QQ312 and baseband processing circuitry QQ314 may be on the same chip or set of chips, boards, or units.

The memory QQ304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry QQ302. The memory QQ304 may store any suitable instructions, data, or information, including a computer program, software, an application including one or more of logic, rules, code, tables, and/or other instructions capable of being executed by the processing circuitry QQ302 and utilized by the network node QQ300. The memory QQ304 may be used to store any calculations made by the processing circuitry QQ302 and/or any data received via the communication interface QQ306. In some embodiments, the processing circuitry QQ302 and memory QQ304 is integrated.

The communication interface QQ306 is used in wired or wireless communication of signaling and/or data between a network node, access network, and/or UE. As illustrated, the communication interface QQ306 comprises port(s)/terminal(s) QQ316 to send and receive data, for example to and from a network over a wired connection. The communication interface QQ306 also includes radio front-end circuitry QQ318 that may be coupled to, or in certain embodiments a part of, the antenna QQ310. Radio front-end circuitry QQ318 comprises filters QQ320 and amplifiers QQ322. The radio front-end circuitry QQ318 may be connected to an antenna QQ310 and processing circuitry QQ302. The radio front-end circuitry may be configured to condition signals communicated between antenna QQ310 and processing circuitry QQ302. The radio front-end circuitry QQ318 may receive digital data that is to be sent out to other network nodes or UEs via a wireless connection. The radio front-end circuitry QQ318 may convert the digital data into a radio signal having the appropriate channel and bandwidth parameters using a combination of filters QQ320 and/or amplifiers QQ322. The radio signal may then be transmitted via the antenna QQ310. Similarly, when receiving data, the antenna QQ310 may collect radio signals which are then converted into digital data by the radio front-end circuitry QQ318. The digital data may be passed to the processing circuitry QQ302. In other embodiments, the communication interface may comprise different components and/or different combinations of components.

In certain alternative embodiments, the network node QQ300 does not include separate radio front-end circuitry QQ318, instead, the processing circuitry QQ302 includes radio front-end circuitry and is connected to the antenna QQ310. Similarly, in some embodiments, all or some of the RF transceiver circuitry QQ312 is part of the communication interface QQ306. In still other embodiments, the communication interface QQ306 includes one or more ports or terminals QQ316, the radio front-end circuitry QQ318, and the RF transceiver circuitry QQ312, as part of a radio unit (not shown), and the communication interface QQ306 communicates with the baseband processing circuitry QQ314, which is part of a digital unit (not shown).

The antenna QQ310 may include one or more antennas, or antenna arrays, configured to send and/or receive wireless signals. The antenna QQ310 may be coupled to the radio front-end circuitry QQ318 and may be any type of antenna capable of transmitting and receiving data and/or signals wirelessly. In certain embodiments, the antenna QQ310 is separate from the network node QQ300 and connectable to the network node QQ300 through an interface or port.

The antenna QQ310, communication interface QQ306, and/or the processing circuitry QQ302 may be configured to perform any receiving operations and/or certain obtaining operations described herein as being performed by the network node. Any information, data and/or signals may be received from a UE, another network node and/or any other network equipment. Similarly, the antenna QQ310, the communication interface QQ306, and/or the processing circuitry QQ302 may be configured to perform any transmitting operations described herein as being performed by the network node. Any information, data and/or signals may be transmitted to a UE, another network node and/or any other network equipment.

The power source QQ308 provides power to the various components of network node QQ300 in a form suitable for the respective components (e.g., at a voltage and current level needed for each respective component). The power source QQ308 may further comprise, or be coupled to, power management circuitry to supply the components of the network node QQ300 with power for performing the functionality described herein. For example, the network node QQ300 may be connectable to an external power source (e.g., the power grid, an electricity outlet) via an input circuitry or interface such as an electrical cable, whereby the external power source supplies power to power circuitry of the power source QQ308. As a further example, the power source QQ308 may comprise a source of power in the form of a battery or battery pack which is connected to, or integrated in, power circuitry. The battery may provide backup power should the external power source fail.

Embodiments of the network node QQ300 may include additional components beyond those shown in Figure 12 for providing certain aspects of the network node's functionality, including any of the functionality described herein and/or any functionality necessary to support the subject matter described herein. For example, the network node QQ300 may include user interface equipment to allow input of information into the network node QQ300 and to allow output of information from the network node QQ300. This may allow a user to perform diagnostic, maintenance, repair, and other administrative functions for the network node QQ300.

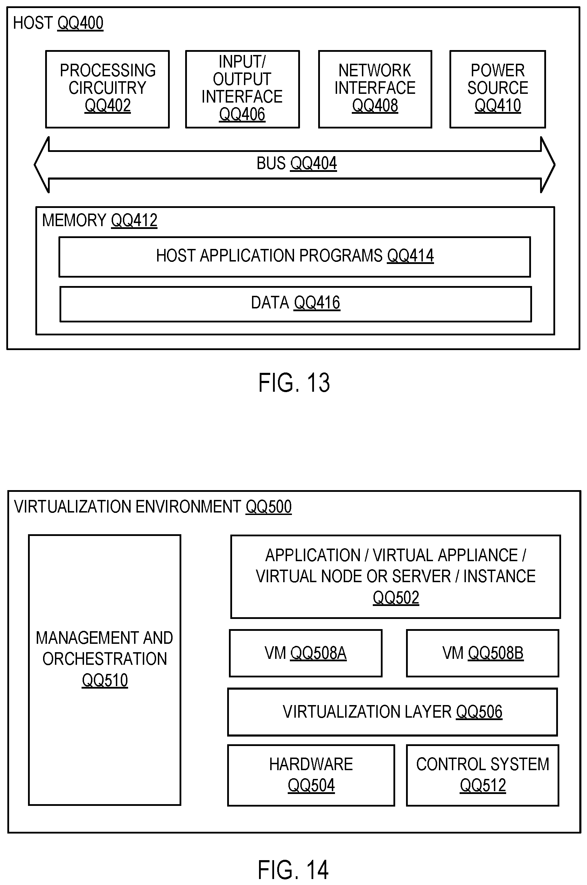

Figure 13 is a block diagram of a host QQ400, which may be an embodiment of the host QQ116 of Figure 10, in accordance with various aspects described herein. As used herein, the host QQ400 may be or comprise various combinations hardware and/or software, including a standalone server, a blade server, a cloud-implemented server, a distributed server, a virtual machine, container, or processing resources in a server farm. The host QQ400 may provide one or more services to one or more UEs.

The host QQ400 includes processing circuitry QQ402 that is operatively coupled via a bus QQ404 to an input/output interface QQ406, a network interface QQ408, a power source QQ410, and a memory QQ412. Other components may be included in other embodiments. Features of these components may be substantially similar to those described with respect to the devices of previous figures, such as Figures QQ2 and QQ3, such that the descriptions thereof are generally applicable to the corresponding components of host QQ400.

The memory QQ412 may include one or more computer programs including one or more host application programs QQ414 and data QQ416, which may include user data, e.g., data generated by a UE for the host QQ400 or data generated by the host QQ400 for a UE. Embodiments of the host QQ400 may utilize only a subset or all of the components shown. The host application programs QQ414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs QQ414 may also provide for user authentication and licensing checks and may periodically report health, routes, and content availability to a central node, such as a device in or on the edge of a core network. Accordingly, the host QQ400 may select and/or indicate a different host for over-the-top services for a UE. The host application programs QQ414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 14 is a block diagram illustrating a virtualization environment QQ500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments QQ500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications QQ502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware QQ504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers QQ506 (also referred to as hypervisors or virtual machine monitors (VMMs)), provide VMs QQ508a and QQ508b (one or more of which may be generally referred to as VMs QQ508), and/or perform any of the functions, features and/or benefits described in relation with some embodiments described herein. The virtualization layer QQ506 may present a virtual operating platform that appears like networking hardware to the VMs QQ508.

The VMs QQ508 comprise virtual processing, virtual memory, virtual networking or interface and virtual storage, and may be run by a corresponding virtualization layer QQ506. Different embodiments of the instance of a virtual appliance QQ502 may be implemented on one or more of VMs QQ508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM QQ508 may be a software implementation of a physical machine that runs programs as if they were executing on a physical, non-virtualized machine. Each of the VMs QQ508, and that part of hardware QQ504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs QQ508 on top of the hardware QQ504 and corresponds to the application QQ502.

Hardware QQ504 may be implemented in a standalone network node with generic or specific components. Hardware QQ504 may implement some functions via virtualization. Alternatively, hardware QQ504 may be part of a larger cluster of hardware (e.g. such as in a data center or CPE) where many hardware nodes work together and are managed via management and orchestration QQ510, which, among others, oversees lifecycle management of applications QQ502. In some embodiments, hardware QQ504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system QQ512 which may alternatively be used for communication between hardware nodes and radio units.

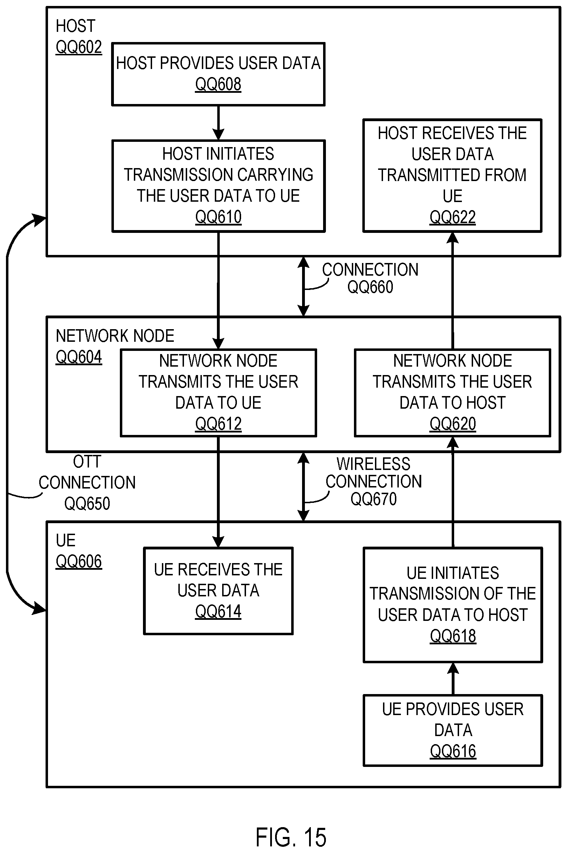

Figure 15 shows a communication diagram of a host QQ602 communicating via a network node QQ604 with a UE QQ606 over a partially wireless connection in accordance with some embodiments. Example implementations, in accordance with various embodiments, of the UE (such as a UE QQ112a of Figure 10 and/or UE QQ200 of Figure 11), network node (such as network node QQ110a of Figure 10 and/or network node QQ300 of Figure 12), and host (such as host QQ116 of Figure 10 and/or host QQ400 of Figure 13) discussed in the preceding paragraphs will now be described with reference to Figure 15.

Like host QQ400, embodiments of host QQ602 include hardware, such as a communication interface, processing circuitry, and memory. The host QQ602 also includes software, which is stored in or accessible by the host QQ602 and executable by the processing circuitry. The software includes a host application that may be operable to provide a service to a remote user, such as the UE QQ606 connecting via an over-the-top (OTT) connection QQ650 extending between the UE QQ606 and host QQ602. In providing the service to the remote user, a host application may provide user data which is transmitted using the OTT connection QQ650.

The network node QQ604 includes hardware enabling it to communicate with the host QQ602 and UE QQ606.

The connection QQ660 may be direct or pass through a core network (like core network QQ106 of Figure 10) and/or one or more other intermediate networks, such as one or more public, private, or hosted networks. For example, an intermediate network may be a backbone network or the Internet.

The UE QQ606 includes hardware and software, which is stored in or accessible by UE QQ606 and executable by the UE's processing circuitry. The software includes a client application, such as a web browser or operator-specific "app" that may be operable to provide a service to a human or non-human user via UE QQ606 with the support of the host QQ602. In the host QQ602, an executing host application may communicate with the executing client application via the OTT connection QQ650 terminating at the UE QQ606 and host QQ602. In providing the service to the user, the UE's client application may receive request data from the host's host application and provide user data in response to the request data. The OTT connection QQ650 may transfer both the request data and the user data. The UE's client application may interact with the user to generate the user data that it provides to the host application through the OTT connection QQ650.

The OTT connection QQ650 may extend via a connection QQ660 between the host QQ602 and the network node QQ604 and via a wireless connection QQ670 between the network node QQ604 and the UE QQ606 to provide the connection between the host QQ602 and the UE QQ606. The connection QQ660 and wireless connection QQ670, over which the OTT connection QQ650 may be provided, have been drawn abstractly to illustrate the communication between the host QQ602 and the UE QQ606 via the network node QQ604, without explicit reference to any intermediary devices and the precise routing of messages via these devices.

As an example of transmitting data via the OTT connection QQ650, in step QQ608, the host QQ602 provides user data, which may be performed by executing a host application. In some embodiments, the user data is associated with a particular human user interacting with the UE QQ606. In other embodiments, the user data is associated with a UE QQ606 that shares data with the host QQ602 without explicit human interaction. In step QQ610, the host QQ602 initiates a transmission carrying the user data towards the UE QQ606. The host QQ602 may initiate the transmission responsive to a request transmitted by the UE QQ606. The request may be caused by human interaction with the UE QQ606 or by operation of the client application executing on the UE QQ606. The transmission may pass via the network node QQ604, in accordance with the teachings of the embodiments described throughout this disclosure. Accordingly, in step QQ612, the network node QQ604 transmits to the UE QQ606 the user data that was carried in the transmission that the host QQ602 initiated, in accordance with the teachings of the embodiments described throughout this disclosure. In step QQ614, the UE QQ606 receives the user data carried in the transmission, which may be performed by a client application executed on the UE QQ606 associated with the host application executed by the host QQ602.

In some examples, the UE QQ606 executes a client application which provides user data to the host QQ602. The user data may be provided in reaction or response to the data received from the host QQ602. Accordingly, in step QQ616, the UE QQ606 may provide user data, which may be performed by executing the client application. In providing the user data, the client application may further consider user input received from the user via an input/output interface of the UE QQ606. Regardless of the specific manner in which the user data was provided, the UE QQ606 initiates, in step QQ618, transmission of the user data towards the host QQ602 via the network node QQ604. In step QQ620, in accordance with the teachings of the embodiments described throughout this disclosure, the network node QQ604 receives user data from the UE QQ606 and initiates transmission of the received user data towards the host QQ602. In step QQ622, the host QQ602 receives the user data carried in the transmission initiated by the UE QQ606.

One or more of the various embodiments improve the performance of OTT services provided to the UE QQ606 using the OTT connection QQ650, in which the wireless connection QQ670 forms the last segment. More precisely, the teachings of these embodiments may improve the quality of physical layer communications and thereby provide benefits such as higher data rates, reduced errors, and reduced retransmissions and hence power savings.

In an example scenario, factory status information may be collected and analyzed by the host QQ602. As another example, the host QQ602 may process audio and video data which may have been retrieved from a UE for use in creating maps. As another example, the host QQ602 may collect and analyze real-time data to assist in controlling vehicle congestion (e.g., controlling traffic lights). As another example, the host QQ602 may store surveillance video uploaded by a UE. As another example, the host QQ602 may store or control access to media content such as video, audio, VR or AR which it can broadcast, multicast or unicast to UEs. As other examples, the host QQ602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection QQ650 between the host QQ602 and UE QQ606, in response to variations in the measurement results. The measurement procedure and/or the network functionality for reconfiguring the OTT connection may be implemented in software and hardware of the host QQ602 and/or UE QQ606. In some embodiments, sensors (not shown) may be deployed in or in association with other devices through which the OTT connection QQ650 passes; the sensors may participate in the measurement procedure by supplying values of the monitored quantities exemplified

23

above, or supplying values of other physical quantities from which software may compute or estimate the monitored quantities. The reconfiguring of the OTT connection QQ650 may include message format, retransmission settings, preferred routing etc.; the reconfiguring need not directly alter the operation of the network node QQ604. Such procedures and functionalities may be known and practiced in the art. In certain embodiments, measurements may involve proprietary UE signaling that facilitates measurements of throughput, propagation times, latency and the like, by the host QQ602. The measurements may be implemented in that software causes messages to be transmitted, in particular empty or 'dummy' messages, using the OTT connection QQ650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

Embodiments described herein provide numerous advantages over the prior art. DL/UL performance is improved, since the DMRS configuration can be quickly switched/optimized for the current usage (e.g., MU-MIMO or SU-MIMO). Another benefit is that depending on UE speed, dynamic switching can be done between different number of additional DMRS symbols which helps achieve a good tradeoff between channel estimation performance and DMRS overhead.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the aspects disclosed herein may be applied to any other aspect, wherever appropriate. Likewise, any advantage of any of the aspects may apply to any other aspects, and vice versa. Other objectives, features, and advantages of the enclosed aspects will be apparent from the description. As used herein, the term "configured to" means set up, organized, adapted, or arranged to operate in a particular way; the term is synonymous with "designed to." As used herein, a particular "procedure" may also refer to a "protocol," or standardized method of processing data or performing tasks.

The present disclosure may, of course, be carried out in other ways than those specifically set forth herein without departing from essential characteristics of the disclosure. The present aspects are to be considered in all respects as illustrative and not restrictive, and all changes coming within the meaning of the appended claims are intended to be embraced therein.

## Claims

1.  A method (100), performed by a wireless device (10, 30) operative in a wireless communication network having a legacy procedure for the generation, transmission, reception, and processing of Demodulation Reference Symbols, DMRS, and an extended procedure, different than the legacy procedure, for the generation, transmission, reception, and processing of DMRS, comprising:

> obtaining (102) an indication of an extended antenna port table that includes both legacy DMRS ports and extended DMRS ports;
> determining (104) one or more DMRS ports from the extended antenna port table; and
> communicating (106) with the network using the one or more determined DMRS ports.

2. The method (100) of claim 1 wherein communicating (106) with the network comprises one or both of receiving a physical downlink shared channel, PDSCH, from the network, or transmitting a physical uplink shared channel, PUSCH, to the network.

3. The method (100) of claim 1 wherein obtaining (102) an indication of an extended antenna port table comprises retrieving an indication of the extended antenna port table from preconfigured information stored in a memory (16) of the wireless device (10, 30) or

> wherein obtaining (102) an indication of an extended antenna port table comprises receiving an indication of the extended antenna port table from the network, wherein optionally
> receiving the indication of the extended antenna port table from the network comprises receiving the indication via Radio Resource Control, RRC, signaling.

4. The method (100) of any of claims 1-3 wherein the indication of the extended antenna port table is an indication of a subset of the extended antenna port table.

5. The method (100) of any of claims 1-4 wherein determining (104) one or more DMRS ports from the extended antenna port table comprises:

> receiving, from the network, an index into the extended antenna port table; and
> using the index to determine the one or more DMRS ports in the extended antenna port table, wherein optionally

receiving, from the network, the index into the extended antenna port table comprises receiving the index in Downlink Control Information, DCI.

6. The method (100) of any of claims 1-5 further comprising:
indexing a DMRS description table with the one or more DMRS ports to determine parameters associated with each of the DMRS ports; and
wherein communicating (106) with the network using the one or more determined DMRS ports comprises communicating with the network using the one or more determined DMRS ports and the determined parameters associated with each of the DMRS ports, wherein optionally
the determined parameters associated with the DMRS comprise at least one of Code Division Multiplexing, CDM, group index, frequency domain orthogonal cover code, FD-OCC, and time domain orthogonal cover code, TD-OCC.

7. The method (100) of any of claims 1-6 wherein

> the extended DMRS ports in the extended antenna port table that are the same as corresponding legacy DMRS ports reuse the legacy DMRS port numbers; and
> the extended DMRS ports in the extended antenna port table that are different than legacy DMRS ports use DMRS port numbers not used by legacy DMRS ports.

8. The method (100) of claim 1 wherein

> the legacy DMRS are generated from one of two codes; and
> the extended DMRS are generated from one of four codes.

9. A wireless device (10, 30) operative in a wireless communication network having a legacy procedure for the generation, transmission, reception, and processing Demodulation Reference Symbols, DMRS, and an extended procedure, different than the legacy procedure, for the generation, transmission, reception, and processing of DMRS, comprising:

communication circuitry (18); and

processing circuitry (14) operatively connected to the communication circuitry (18), the processing circuitry (14) configured to:

obtain (102) an indication of an extended antenna port table that includes both legacy DMRS ports and extended DMRS ports;

determine (104) one or more DMRS ports from the extended antenna port table; and

communicate (106) with the network using the one or more determined DMRS ports.

10. The wireless device (10, 30) of claim 9 wherein the processing circuitry (14) is further configured to perform any steps of the method of any one of claims 2 to 8.

11. A method (200), performed by a base station (50, 60) operative in a wireless communication network having a legacy procedure for the generation, transmission, reception, and processing of Demodulation Reference Symbols, DMRS, and an extended procedure, different than the legacy procedure, for the generation, transmission, reception, and processing of DMRS, comprising:

indicating (202) to a wireless device (10, 30) an extended antenna port table that includes both legacy DMRS ports and extended DMRS ports;

sending (204) to the wireless device (10, 30) an index into the extended antenna port table, wherein the index determines one or more DMRS ports; and

communicating (206) with the wireless device (10, 30) using the one or more determined DMRS ports.

12. The method (200) of claim 11 wherein communicating (106) with the wireless device (10, 30) comprises one or both of transmitting a physical downlink shared channel, PDSCH, to the wireless device (10, 30), or receiving a physical uplink shared channel, PUSCH, from the wireless device (10, 30).

13. The method (200) of claim 12 wherein indicating (202) to a wireless device (10, 30) an extended antenna port table comprises sending an indication of the extended antenna port table to the wireless device (10, 30) via Radio Resource Control, RRC, signaling.

14. The method (200) of claim 12 wherein the indication of the extended antenna port table is an indication of a subset of the extended antenna port table.

15. The method (200) of any of claims 11-14 wherein sending (204) to the wireless device (10, 30) an index into the extended antenna port table comprises sending the index in Downlink Control Information, DCI.

16. A base station (50, 60) operative in a wireless communication network having a legacy procedure for the generation, transmission, reception, and processing of Demodulation Reference Symbols, DMRS, and an extended procedure, different than the legacy procedure, for the generation, transmission, reception, and processing of DMRS, comprising:

communication circuitry (56); and

processing circuitry (52) operatively connected to the communication circuitry (56), the processing circuitry (52) configured to

indicate (202) to a wireless device (10, 30) an extended antenna port table that includes both legacy DMRS ports and extended DMRS ports;

send (204) to the wireless device (10, 30) an index into the extended antenna port table whereby the wireless device (10, 30) determines one or more DMRS ports; and communicate (206) with the wireless device (10, 30) using the one or more determined DMRS ports.

17. The base station (50, 60) of claim 16, wherein the processing circuitry (52) is further configured to perform any steps of the method of any one of claims 12 to 15.

**Patentansprüche**

1. Verfahren (100), das durch eine drahtlose Vorrichtung (10, 30) durchgeführt wird, die in einem drahtlosen Kommunikationsnetz mit einer bestehenden Prozedur für die Erzeugung, die Übertragung, den Empfang und die Verarbeitung von Demodulationsreferenzsymbolen, DMRS, und einer erweiterten Prozedur, die sich von der bestehenden Prozedur unterscheidet, für die Erzeugung, die Übertragung, den Empfang und die Verarbeitung von DMRS betrieben wird, umfassend:

Erhalten (102) einer Angabe einer erweiterten Antennenporttabelle, die sowohl bestehende DMRS-Ports als auch erweiterte DMRS-Ports beinhaltet;
Bestimmen (104) eines oder mehrerer DMRS-Ports aus der erweiterten Antennenporttabelle; und
Kommunizieren (106) mit dem Netz unter Verwendung des einen oder der mehreren bestimmten DMRS-Ports.

2. Verfahren (100) nach Anspruch 1, wobei das Kommunizieren (106) mit dem Netz eines oder beide von Empfangen eines gemeinsam genutzten physikalischen Downlink-Kanals, PDSCH, von dem Netz oder Übertragen eines gemeinsam genutzten physikalischen Uplink-Kanals, PUSCH, an das Netz umfasst.

3. Verfahren (100) nach Anspruch 1, wobei das Erhalten (102) einer Angabe einer erweiterten Antennenporttabelle Abrufen einer Angabe der erweiterten Antennenporttabelle aus vorkonfigurierten Informationen, die in einem Speicher (16) der drahtlosen Vorrichtung (10, 30) gespeichert sind, umfasst oder

wobei das Erhalten (102) einer Angabe einer erweiterten Antennenporttabelle Empfangen einer Angabe der erweiterten Antennenporttabelle von dem Netz umfasst, wobei gegebenenfalls
das Empfangen der Angabe der erweiterten Antennenporttabelle von dem Netz Empfangen der Angabe über eine Funkressourcensteuerungs-Signalisierung, RRC-Signalisierung, umfasst.

4. Verfahren (100) nach einem der Ansprüche 1-3, wobei die Angabe der erweiterten Antennenporttabelle eine Angabe einer Teilmenge der erweiterten Antennenporttabelle ist.

5. Verfahren (100) nach einem der Ansprüche 1-4, wobei das Bestimmen (104) eines oder mehrerer DMRS-Ports aus der erweiterten Antennenporttabelle Folgendes umfasst:

Empfangen, von dem Netz, eines Index in die erweiterte Antennenporttabelle; und
Verwenden des Index, um den einen oder die mehreren DMRS-Ports in der erweiterten Antennenporttabelle zu bestimmen, wobei gegebenenfalls
das Empfangen, von dem Netz, des Index in die erweiterte Antennenporttabelle Empfangen des Index in Downlink-Steuerungsinformationen, DCI, umfasst.

6. Verfahren (100) nach einem der Ansprüche 1-5, ferner umfassend:

Indexieren einer DMRS-Beschreibungstabelle mit dem einen oder den mehreren DMRS-Ports, um mit jedem der DMRS-Ports verbundene Parameter zu bestimmen; und
wobei das Kommunizieren (106) mit dem Netz unter Verwendung des einen oder der mehreren bestimmten DMRS-Ports Kommunizieren mit dem Netz unter Verwendung des einen oder der mehreren bestimmten DMRS-Ports und der bestimmten, mit jedem der DMRS-Ports verbundenen Parameter umfasst, wobei gegebenenfalls die bestimmten, mit den DMRS verbundenen Parameter mindestens eines von einem Codemultiplexverfahren, CDM, einem Gruppenindex, einem orthogonalen Abdeckungscode im Frequenzbereich, FD-OCC, und einem orthogonalen Abdeckungscode im Zeitbereich, TD-OCC, umfassen.

7. Verfahren (100) nach einem der Ansprüche 1-6, wobei

die erweiterten DMRS-Ports in der erweiterten Antennenporttabelle, die mit entsprechenden bestehenden DMRS-Ports identisch sind, die bestehenden DMRS-Portnummern wiederverwenden; und
die erweiterten DMRS-Ports in der erweiterten Antennenporttabelle, die sich von bestehenden DMRS-Ports unterscheiden, DMRS-Portnummern verwenden, die nicht durch bestehende DMRS-Ports verwendet werden.

8. Verfahren (100) nach Anspruch 1, wobei

die bestehenden DMRS aus einem von zwei Codes erzeugt werden; und
die erweiterten DMRS aus einem von vier Codes erzeugt werden.

9. Drahtlose Vorrichtung (10, 30), die in einem drahtlosen Kommunikationsnetz mit einer bestehenden Prozedur für die Erzeugung, die Übertragung, den Empfang und die Verarbeitung Demodulationsreferenzsymbolen, DMRS, und einer erweiterten Prozedur, die sich von der bestehenden Prozedur unterscheidet, für die Erzeugung, die Übertragung, den Empfang und die Verarbeitung von DMRS betrieben wird, umfassend:

eine Kommunikationsschaltung (18); und
eine Verarbeitungsschaltung (14), die betriebswirksam mit der Kommunikationsschaltung (18) verbunden ist, wobei die Verarbeitungsschaltung (14) zu Folgendem konfiguriert ist:

Erhalten (102) einer Angabe einer erweiterten Antennenporttabelle, die sowohl bestehende DMRS-Ports als auch erweiterte DMRS-Ports beinhaltet;
Bestimmen (104) eines oder mehrerer DMRS-Ports aus der erweiterten Antennenporttabelle; und
Kommunizieren (106) mit dem Netz unter Verwendung des einen oder der mehreren bestimmten DMRS-Ports.

10. Drahtlose Vorrichtung (10, 30) nach Anspruch 9, wobei die Verarbeitungsschaltung (14) ferner dazu konfiguriert ist, beliebige Schritte des Verfahrens nach einem der Ansprüche 2 bis 8 durchzuführen.

11. Verfahren (200), das durch eine Basisstation (50, 60) durchgeführt wird, die in einem drahtlosen Kommunikationsnetz mit einer bestehenden Prozedur für die Erzeugung, die Übertragung, den Empfang und die Verarbeitung von Demodulationsreferenzsymbolen, DMRS, und einer erweiterten Prozedur, die sich von der bestehenden Prozedur unterscheidet, für die Erzeugung, die Übertragung, den Empfang und die Verarbeitung von DMRS betrieben wird, umfassend:

Angeben (202), an eine drahtlose Vorrichtung (10, 30), einer erweiterten Antennenporttabelle, die sowohl bestehende DMRS-Ports als auch erweiterte DMRS-Ports beinhaltet;
Senden (204), an die drahtlose Vorrichtung (10, 30), eines Index in die erweiterte Antennenporttabelle, wobei der Index einen oder mehrere DMRS-Ports bestimmt; und
Kommunizieren (206) mit der drahtlosen Vorrichtung (10, 30) unter Verwendung des einen oder der mehreren bestimmten DMRS-Ports.

12. Verfahren (200) nach Anspruch 11, wobei das Kommunizieren (106) mit der drahtlosen Vorrichtung (10, 30) eines oder beide von Übertragen eines gemeinsam genutzten physikalischen Downlink-Kanals, PDSCH, an die drahtlose Vorrichtung (10, 30) oder Empfangen eines gemeinsam genutzten physikalischen Uplink-Kanals, PUSCH, von der drahtlosen Vorrichtung (10, 30) umfasst.

13. Verfahren (200) nach Anspruch 12, wobei das Angeben (202), an eine drahtlose Vorrichtung (10, 30), einer erweiterten Antennenporttabelle Senden einer Angabe der erweiterten Antennenporttabelle an die drahtlose Vorrichtung (10, 30) über eine Funkressourcensteuerungssignalisierung, RRC-Signalisierung, umfasst.

14. Verfahren (200) nach Anspruch 12, wobei die Angabe der erweiterten Antennenporttabelle eine Angabe einer Teilmenge der erweiterten Antennenporttabelle ist.

15. Verfahren (200) nach einem der Ansprüche 11-14, wobei das Senden (204), an die drahtlose Vorrichtung (10, 30), eines Index in die erweiterte Antennenporttabelle Senden des Index in Downlink-Steuerungsinformationen, DCI, umfasst.

16. Basisstation (50, 60), die in einem drahtlosen Kommunikationsnetz mit einer bestehenden Prozedur für die Erzeugung, die Übertragung, den Empfang und die Verarbeitung von Demodulationsreferenzsymbolen, DMRS, und einer erweiterten Prozedur, die sich von der bestehenden Prozedur unterscheidet, für die Erzeugung, die Übertragung, den Empfang und die Verarbeitung von DMRS betrieben wird, umfassend:

eine Kommunikationsschaltung (56); und
eine Verarbeitungsschaltung (52), die betriebswirksam mit der Kommunikationsschaltung (56) verbunden ist, wobei die Verarbeitungsschaltung (52) zu Folgendem konfiguriert ist:

Angeben (202), an eine drahtlose Vorrichtung (10, 30), einer erweiterten Antennenporttabelle, die sowohl bestehende DMRS-Ports als auch erweiterte DMRS-Ports beinhaltet;
Senden (204), an die drahtlose Vorrichtung (10, 30), eines Index in die erweiterte Antennenporttabelle,

**EP 4 515 797 B1**

wodurch die drahtlose Vorrichtung (10, 30) einen oder mehrere DMRS-Ports bestimmt; und
Kommunizieren (206) mit der drahtlosen Vorrichtung (10, 30) unter Verwendung des einen oder der mehreren bestimmten DMRS-Ports.

**17.** Basisstation (50, 60) nach Anspruch 16, wobei die Verarbeitungsschaltung (52) ferner dazu konfiguriert ist, beliebige Schritte des Verfahrens nach einem der Ansprüche 12 bis 15 durchzuführen.


**Revendications**

**1.** Procédé (100), réalisé par un dispositif sans fil (10, 30) opérationnel dans un réseau de communication sans fil ayant une procédure existante pour la génération, la transmission, la réception, et le traitement de symboles de référence de démodulation, DMRS, et une procédure étendue, différente de la procédure existante, pour la génération, la transmission, la réception, et le traitement de DMRS, comprenant :

l'obtention (102) d'une indication d'une table de ports d'antenne étendue qui inclut à la fois des ports DMRS existants et des ports DMRS étendus ;
la détermination (104) d'un ou plusieurs ports DMRS à partir de la table de ports d'antenne étendue ; et
la communication (106) avec le réseau en utilisant les un ou plusieurs ports DMRS déterminés.

**2.** Procédé (100) selon la revendication 1, dans lequel la communication (106) avec le réseau comprend une ou deux parmi la réception d'un canal physique partagé de liaison descendante, PDSCH, provenant du réseau, ou la transmission d'un canal physique partagé de liaison montante, PUSCH, au réseau.

**3.** Procédé (100) selon la revendication 1, dans lequel l'obtention (102) d'une indication d'une table de ports d'antenne étendue comprend la récupération d'une indication de la table de ports d'antenne étendue à partir d'informations préconfigurées stockées dans une mémoire (16) du dispositif sans fil (10, 30) ou

dans lequel l'obtention (102) d'une indication d'une table de ports d'antenne étendue comprend la réception d'une indication de la table de ports d'antenne étendue provenant du réseau, dans lequel éventuellement
la réception de l'indication de la table de ports d'antenne étendue provenant du réseau comprend la réception de l'indication via une signalisation de commande de ressources radio, RRC.

**4.** Procédé (100) selon l'une quelconque des revendications 1 à 3, dans lequel l'indication de la table de ports d'antenne étendue est une indication d'un sous-ensemble de la table de ports d'antenne étendue.

**5.** Procédé (100) selon l'une quelconque des revendications 1 à 4, dans lequel la détermination (104) d'un ou plusieurs ports DMRS à partir de la table de ports d'antenne étendue comprend :

la réception, provenant du réseau, d'un index dans la table de ports d'antenne étendue ; et
l'utilisation de l'index pour déterminer les un ou plusieurs ports DMRS dans la table de ports d'antenne étendue, dans lequel éventuellement
la réception, provenant du réseau, de l'index dans la table de ports d'antenne étendue comprend la réception de l'index dans des informations de commande de liaison descendante, DCI.

**6.** Procédé (100) selon l'une quelconque des revendications 1 à 5, comprenant en outre :

l'indexation d'une table de description de DMRS avec les un ou plusieurs ports DMRS pour déterminer des paramètres associés à chacun des ports DMRS ; et
dans lequel la communication (106) avec le réseau en utilisant les un ou plusieurs ports DMRS déterminés comprend la communication avec le réseau en utilisant les un ou plusieurs ports DMRS déterminés et les paramètres déterminés associés à chacun des ports DMRS, dans lequel éventuellement
les paramètres déterminés associés aux DMRS comprennent au moins un parmi un index de groupe de multiplexage par répartition en code, CDM, un code de couverture orthogonal en domaine fréquentiel, FD-OCC, et un code de couverture orthogonal en domaine temporel, TD-OCC.

**7.** Procédé (100) selon l'une quelconque des revendications 1 à 6, dans lequel

les ports DMRS étendus dans la table de ports d'antenne étendue qui sont les mêmes que des ports DMRS existants correspondants réutilisent les numéros de ports DMRS existants ; et

les ports DMRS étendus dans la table de ports d'antenne étendue qui sont différents des ports DMRS existants utilisent des numéros de ports DMRS non utilisés par des ports DMRS existants.

**8.** Procédé (100) selon la revendication 1, dans lequel

les DMRS existants sont générés à partir d'un de deux codes ; et
les DMRS étendus sont générés à partir d'un de quatre codes.

**9.** Dispositif sans fil (10, 30) opérationnel dans un réseau de communication sans fil ayant une procédure existante pour la génération, la transmission, la réception, et le traitement de symboles de référence de démodulation, DMRS, et une procédure étendue, différente de la procédure existante, pour la génération, la transmission, la réception, et le traitement de DMRS, comprenant :

une circuiterie de communication (18) ; et
une circuiterie de traitement (14) connectée de manière opérationnelle à la circuiterie de communication (18), la circuiterie de traitement (14) étant configurée pour :

obtenir (102) une indication d'une table de ports d'antenne étendue qui inclut à la fois des ports DMRS existants et des ports DMRS étendus ;
déterminer (104) un ou plusieurs ports DMRS à partir de la table de ports d'antenne étendue ; et
communiquer (106) avec le réseau en utilisant les un ou plusieurs ports DMRS déterminés.

**10.** Dispositif sans fil (10, 30) selon la revendication 9, dans lequel la circuiterie de traitement (14) est en outre configurée pour réaliser toutes les étapes du procédé selon l'une quelconque des revendications 2 à 8.

**11.** Procédé (200), réalisé par une station de base (50, 60) opérationnelle dans un réseau de communication sans fil ayant une procédure existante pour la génération, la transmission, la réception, et le traitement de symboles de référence de démodulation, DMRS, et une procédure étendue, différente de la procédure existante, pour la génération, la transmission, la réception, et le traitement de DMRS, comprenant :

l'indication (202) à un dispositif sans fil (10, 30) d'une table de ports d'antenne étendue qui inclut à la fois des ports DMRS existants et des ports DMRS étendus ;
l'envoi (204) au dispositif sans fil (10, 30) d'un index dans la table de ports d'antenne étendue, dans lequel l'index détermine un ou plusieurs ports DMRS ; et
la communication (206) avec le dispositif sans fil (10, 30) en utilisant les un ou plusieurs ports DMRS déterminés.

**12.** Procédé (200) selon la revendication 11, dans lequel la communication (106) avec le dispositif sans fil (10, 30) comprend une ou deux parmi la transmission d'un canal physique partagé de liaison descendante, PDSCH, au dispositif sans fil (10, 30), ou la réception d'un canal physique partagé de liaison montante, PUSCH, provenant du dispositif sans fil (10, 30).

**13.** Procédé (200) selon la revendication 12, dans lequel l'indication (202) à un dispositif sans fil (10, 30) d'une table de ports d'antenne étendue comprend l'envoi d'une indication de la table de ports d'antenne étendue au dispositif sans fil (10, 30) via une signalisation de commande de ressources radio, RRC.

**14.** Procédé (200) selon la revendication 12, dans lequel l'indication de la table de ports d'antenne étendue est une indication d'un sous-ensemble de la table de ports d'antenne étendue.

**15.** Procédé (200) selon l'une quelconque des revendications 11 à 14, dans lequel l'envoi (204) au dispositif sans fil (10, 30) d'un index dans la table de ports d'antenne étendue comprend l'envoi de l'index dans des informations de commande de liaison descendante, DCI.

**16.** Station de base (50, 60) opérationnelle dans un réseau de communication sans fil ayant une procédure existante pour la génération, la transmission, la réception, et le traitement de symboles de référence de démodulation, DMRS, et une procédure étendue, différente de la procédure existante, pour la génération, la transmission, la réception, et le traitement de DMRS, comprenant :

une circuiterie de communication (56) ; et

une circuiterie de traitement (52) connectée de manière opérationnelle à la circuiterie de communication (56), la circuiterie de traitement (52) étant configurée pour :

indiquer (202) à un dispositif sans fil (10, 30) une table de ports d'antenne étendue qui inclut à la fois des ports DMRS existants et des ports DMRS étendus ;

envoyer (204) au dispositif sans fil (10, 30) un index dans la table de ports d'antenne étendue par lequel le dispositif sans fil (10, 30) détermine un ou plusieurs ports DMRS ; et

communiquer (206) avec le dispositif sans fil (10, 30) en utilisant les un ou plusieurs ports DMRS déterminés.

17. Station de base (50, 60) selon la revendication 16, dans laquelle la circuiterie de traitement (52) est en outre configurée pour réaliser toutes les étapes du procédé selon l'une quelconque des revendications 12 à 15.

one slot

type-1 single-symbol DMRS

FIG. 1A

one slot

type-1 double-symbol DMRS

FIG. 1B

one slot

type-2 single-symbol DMRS

FIG. 1C

one slot

type-2 double-symbol DMRS

FIG. 1D

CDM group 0

CDM group 1

CDM group 2

1 front-loaded DM-RS

1 front-loaded plus 1 additional
DM-RS

2 front-loaded DM-RS

2 front-loaded plus 1 additional
2-symbol DM-RS

1 front-loaded plus 2 additional
DM-RS for high Doppler

1 front-loaded plus 3 additional
DM-RS for high Doppler

symbols

FIG. 2

DM-RS for 2 symbol PDSCH

DM-RS for 4 symbol PDSCH

1 additional DM-RS configured for
7 symbol PDSCH

symbols

FIG. 3

100

OBTAIN AN INDICATION OF AN EXTENDED ANTENNA
PORT TABLE THAT INCLUDES BOTH LEGACY DMRS
PORTS AND EXTENDED DMRS PORTS
102

DETERMINE ONE OR MORE DMRS PORTS FROM THE
EXTENDED ANTENNA PORT TABLE
104

COMMUNICATE WITH THE NETWORK USING THE ONE
OR MORE RETRIEVED DMRS PORTS
106

FIG. 4

200

INDICATE TO A WIRELESS DEVICE AN EXTENDED
ANTENNA PORT TABLE THAT INCLUDES BOTH LEGACY
DMRS PORTS AND EXTENDED DMRS PORTS
202

SEND TO THE WIRELESS DEVICE AN INDEX INTO THE
EXTENDED ANTENNA PORT TABLE WHEREBY THE
WIRELESS DEVICE DETERMINES ONE OR MORE DMRS
PORTS
204

COMMUNICATE WITH THE WIRELESS DEVICE USING
THE ONE OR MORE DETERMINED DMRS PORTS
206

FIG. 5

WIRELESS DEVICE (e.g., UE)
10

PROCESSING
CIRCUITRY
14

MEM
16

20

COMM.
CIRCUITRY
18

FIG. 6

WIRELESS DEVICE (e.g., UE)
30

DMRS PORT
DETERMINING
UNIT
34

EXTENDED
ANTENNA PORT
TABLE
INDICATION
OBTAINING UNIT
32

COMMUNICATING
UNIT
36

FIG. 7

NETWORK NODE (e.g., BASE STATION)
50

PROCESSING
CIRCUITRY
52

MEM
54

COMM.
CIRCUITRY
56

58

FIG. 8

NETWORK NODE (e.g., BASE STATION)
60

EXTENDED
ANTENNA PORT
TABLE
INDICATING UNIT
62

EXTENDED
ANTENNA PORT
TABLE INDEX
SENDING UNIT
64

COMMUNICATING
UNIT
66

FIG. 9

COMMUNICATION SYSTEM
QQ100

HOST
QQ116

TELECOMMUNICATION NETWORK
QQ102

CORE NETWORK
QQ106

CORE NETWORK
NODE
QQ108

ACCESS NETWORK
QQ104

NETWORK NODE
QQ110A

NETWORK NODE
QQ110B

UE
QQ112A

UE
QQ112B

HUB
QQ114

UE
QQ112C

UE
QQ112D

FIG. 10

UE <u>QQ200</u>

| PROCESSING CIRCUITRY <u>QQ202</u> | INPUT/OUTPUT INTERFACE <u>QQ206</u> | POWER SOURCE <u>QQ208</u> |

BUS <u>QQ204</u>

MEMORY <u>QQ210</u>

APPLICATION PROGRAMS <u>QQ214</u>

DATA <u>QQ216</u>

COMMUNICATION INTERFACE <u>QQ212</u>

TRANSMITTER <u>QQ218</u>

RECEIVER <u>QQ220</u>

ANTENNA QQ222

FIG. 11

NETWORK NODE <u>QQ300</u>

ANTENNA QQ310

COMMUNICATION INTERFACE <u>QQ306</u>

RADIO FRONT-END CIRCUITRY <u>QQ318</u>

| FILTER <u>QQ320</u> | AMPLIFIER <u>QQ322</u> |

PORT / TERMINAL <u>QQ316</u>

POWER SOURCE <u>QQ308</u>

PROCESSING CIRCUITRY <u>QQ302</u>

RF TRANSCEIVER CIRCUITRY <u>QQ312</u>

BASEBAND CIRCUITRY <u>QQ314</u>

MEMORY <u>QQ304</u>

FIG. 12

HOST QQ400

| PROCESSING CIRCUITRY QQ402 | INPUT/ OUTPUT INTERFACE QQ406 | NETWORK INTERFACE QQ408 | POWER SOURCE QQ410 |

BUS QQ404

MEMORY QQ412

HOST APPLICATION PROGRAMS QQ414

DATA QQ416

FIG. 13

VIRTUALIZATION ENVIRONMENT QQ500

MANAGEMENT AND ORCHESTRATION QQ510

APPLICATION / VIRTUAL APPLIANCE / VIRTUAL NODE OR SERVER / INSTANCE QQ502

VM QQ508A

VM QQ508B

VIRTUALIZATION LAYER QQ506

HARDWARE QQ504

CONTROL SYSTEM QQ512

FIG. 14

FIG. 15

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63336813 W

- WO 2022033555 A1